# EUROPEAN PATENT APPLICATION

(11) **EP 3 376 220 A1**
(43) Date of publication of application: **19.09.2018**
(21) Application number: 16864005.0
(22) Date of filing: 25.10.2016
(51) Int. Cl.: G01N 30/20, G01N 30/02, G01N 30/24, G01N 37/00

(54) **FLOW PATH STRUCTURE AND MEASURING DEVICE FOR LIQUID TO BE MEASURED**

(30) Priority: 13.11.2015 JP 2015223200
(71) Applicant: Alps Electric Co., Ltd., Tokyo 145-8501 (JP)
(72) Inventor: SAMESHIMA, Kenichiro, Tokyo 145-8501 (JP)
(74) Representative: Schmitt-Nilson Schraud Waibel Wohlfrom Patentanwälte Partnerschaft mbB
(86) International application number: PCT/JP2016/081576
(87) International publication number: WO 2017/082041

(57) **Abstract**

A flow path structure that is incorporated into a measuring device that facilitates maintenance, includes a base, and a flow path switch member provided in a flow path switch member accommodation part and measures a liquid to be measured. The base includes a separation element accommodation part to accommodate a separation element that separates a plurality of components included in the liquid to be measured, and the flow path switch member accommodation part provided at an intermediate part of a flow path that guides the liquid to be measured. The flow path switch member measures the liquid to be measured, and switches a state of a flow path inside the base between a first flow path state in which the liquid to be measured is guided outside the separation element accommodation part, and a second flow path state in which the measured liquid is guided inside the separation element accommodation part.

## Description

### TECHNICAL FIELD

The present invention relates to a flow path structure that is used in a measuring device for a liquid to be measured, and the measuring device for the liquid to be measured and having the flow path structure incorporated into the measuring device.

### BACKGROUND ART

In a case in which a measurement is made to obtain information related to a composition of a liquid to be measured, HPLC (High Performance Liquid Chromatography) devices are used, for example.

Regarding the HPLC devices, Patent Document 1 describes a HPLC device having a column, a liquid supply part, a sample introduction part, a detector part, a controller part, a drain port, a first flow path selector valve, and a second flow path selector valve. Each of the first flow path selector valve and the second flow path selector valve has a plurality of flow path grooves, and is a 3-positoin valve that can select from 3 positions.

The HPLC device described in Patent Document 1 can take a Load (sample input) position and an INJ/Purge in (sample injection/measuring pump purge input) position, by controlling operations of the liquid supply part and the sample introduction part by the controller part.

In the Load (sample input) position, a sampling needle of the sample introduction part is immersed into a sample container containing a sample, and a measuring pump of the sample introduction part performs an input operation. Hence, the sample is input to a sampling loop of the sample introduction part and sampled.

In the INJ/Purge in (sample injection/- measuring pump purge input) position, a mobile phase passes the sampling loop, and flows in a flow path from the column and passing the detector part, through a connection point between the sampling needle and an injection port of the sample introduction part. In addition, the sample that is sampled in the sampling loop is supplied to the column, and separation of the sample starts at the column.

Recently, POCT (Point-Of-Care Testing), that refers to simple and rapid tests or the like conducted by medical personnel at medical examination and nursing sites, is becoming popular. From a viewpoint of performing the POCT, the HPLC device is preferably simple to use. In addition, the HPLC device preferably has a small size.

### PRIOR ART DOCUMENTS

### PATENT DOCUMENTS

Patent Document 1: Japanese Laid-Open Patent Publication No. 2001-255316

### DISCLOSURE OF THE INVENTION

### PROBLEM TO BE SOLVED BY THE INVENTION

However, the sample introduction part of the HPLC device described in Patent Document 1 has a relatively large number of parts, and suffers from a problem in that it is difficult to use the HPLC device without expert knowledge of the HPLC device. In other words, there is a problem in that the HPLC device described in Patent Document 1 is not popular as a device for POCT that requires to be attended by general personnel having no expert knowledge. Further, because it is difficult to use the HPLC device, there is a problem in that it is difficult to attend to maintenance of the HPLC device.

In addition, the HPLC device described in Patent Document 1 has relatively large members, such as a first flow path switch valve, a second flow path switch valve, or the like, and there is a problem in that it is difficult to reduce the size of the HPLC device.

The present invention is conceived to solve the problems of the prior art described above. One object of the present invention is to provide a flow path structure to be incorporated into a measuring device that enables easy maintenance. In addition, one object of the present invention is to provide a flow path structure to be incorporated into a measuring device having a size that can be reduced. Another object of the present invention is to provide a measuring device for a liquid to be measured and having a flow path structure incorporated into the measuring device.

### MEANS OF SOLVING THE PROBLEM

In one embodiment of the present invention, a flow path structure includes a base that has a separation element accommodation part accommodating a separation element that separates a plurality of components included in a liquid to be measured, and a flow path switch member accommodation part provided at an intermediate part of a flow path that guides the liquid to be measured to the separation element accommodation part, and a flow path switch member provided in the flow path switch member accommodation part, and is characterized in that the flow path switch member switches a state of a flow path inside the base between a first flow path state in which the liquid to be measured is guided to an inside of the flow path switch member, and a second flow path state in which the liquid to be measured, guided to the inside of the flow path switch member, is guided to an inside of the separation element accommodation part, wherein the liquid to be measured, guided to the inside of the flow path switch member, is held and measured when the state of the flow path inside the base makes a transition from the first flow path state to the second flow path state.

According to the flow path structure in one embodiment of the present invention, the flow path switch member switches the state of the flow path inside the base between the first flow path state in which the liquid to be measured is guided to the inside of the flow path switch member, and the second flow path state in which the liquid to be measured, guided to the inside of the flow path switch member, is guided to the inside of the separation element accommodation part. When the state of the flow path inside the base makes a transition from the first flow path state to the second flow path state, the flow path switch member holds the liquid to be measured, that is introduced inside the flow path switch member itself, to measure the liquid. Because the flow path structure has such a flow path switch member, it is possible to reduce the number of parts of the part where the liquid to be measured is introduced. For this reason, it is easy to use the measuring device that measures the liquid to be measured, and maintenance of the measuring device is facilitated. In addition, because it is possible to reduce the number of parts of the part where the liquid to be measured is introduced, it is possible to reduce the size of the measuring device.

In addition, in order to measure information related to the composition of the liquid to be measured with a high sensitivity, it is preferable that a volume of a flow path, between a part where the liquid to be measured is measured, and the separation element accommodation part accommodating the separation element, is as small as possible. This is because the liquid to be measured diffuses in the flow path, when the flow path between the part where the liquid to be measured is measured and the separation element accommodation part accommodating the separation element has a large volume.

On the other hand, according to the flow path structure in one embodiment of the present invention, the flow path structure includes the flow path switch member, and thus, the volume of the flow path between the part where the liquid to be measured is measured and the separation element accommodation part accommodating the separation element can be made small. Hence, the information related to the composition of the liquid to be measured can be measured with a high sensitivity.

According to the flow path structure of the present invention, the base may further have a first supply flow path that guides a developer solution as a mobile phase to the separation element accommodation part, and a second supply flow path that guides the liquid to be measured, the flow path switch member may have a first flow path that guides the developer solution, and a second flow path that holds the liquid to be measured, in the first flow path state, the first flow path is connected to the first supply flow path, and the second flow path is connected to the second supply flow path, and in the second flow path state, the second flow path is connected to the first supply flow path.

According to this flow path structure, the base includes the first supply flow path that guides the developer solution to the separation element accommodation part, and the second supply flow path that guides the liquid to be measured to the inside of the base. On the other hand, the flow path switch member includes the first flow path that guides the developer solution, and the second flow path that holds and measures the liquid to be measured. The flow path switch member in the first flow path state guides the liquid to be measured to the second flow path that is connected to the second supply flow path, and holds and measures the liquid to be measured in the second flow path when the flow path of the base makes the transition from the first flow path state to the second flow path state. Further, the flow path switch member in the second flow path state can guide the liquid to be measured, that is measured in the second flow path, to the inside of the separation element accommodation part, using the second flow path that is connected to the first supply flow path.

According to the flow path structure of the present invention, the flow path switch member may be slidably provided inside the flow path switch member accommodation part, and when the flow path switch member slides inside the flow path switch member accommodation part and the state of the floe path inside the base makes the transition from the first flow path state to the second flow path state, openings at both ends of the second flow path may be closed by sliding surfaces opposing the flow path switch member, and the flow path switch member may hold and measure the liquid to be measured, guided to the second flow path.

According to this flow path structure, when the flow path switch member slides inside the flow path switch member accommodation part and the state of the flow path inside the base makes the transition from the first flow path state to the second flow path state, the openings at both ends of the second flow path are closed by the sliding surfaces opposing the floe path switch member. Hence, a closed space is formed by the second flow path and the sliding surfaces. For this reason, the liquid to be measured, flowing through the second flow path, is temporarily held in the closed space formed by the second flow path and the sliding surfaces, to be separated from other liquids. Accordingly, the measurement of the liquid 211 to be measured is performed in the second flow path 334 of the flow path switch member 330.

According to the flow path structure of the present invention, the flow path switch member may move linearly in a direction intersecting the first supply flow path and the second supply flow path. According to this flow path structure, the flow path switch member can cause the state of the flow path inside the base to make the transition from the first flow path state to the second flow path state by a relatively simple movement.

In the flow path structure of the present invention, the flow path switch member accommodation part may extend in a direction parallel to a principal plane of the base, and the flow path switch member may have a parallelepiped shape, and be movable inside the flow path switch member accommodation part along a direction in which the flow path switch member accommodation part extends. According to this flow path structure, the liquid to be measured, that is measured in the second flow path, can be guided to the inside of the separation element accommodation part, when the flow path switch member that has a relatively simple structure moves along the direction in which the flow path switch member accommodation part extends.

In the flow path structure of the present invention, the flow path switch member accommodation part may extend in a direction intersecting a principal plane of the base, and the flow path switch member may have a parallelepiped shape, and be movable inside the flow path switch member accommodation part along a direction in which the flow path switch member accommodation part extends.

According to this flow path structure, the flow path switch member can guide the liquid to be measured, that is measured in the second flow path, to the inside of the separation element accommodation part, by moving along the direction in which the flow path switch member accommodation part extends, that is, along the direction intersecting the principal plane of the base. For this reason, it is possible to further reduce the size of the flow path structure in the direction parallel to the principal plane of the base.

In the flow path structure of the present invention, the flow path switch member may be connected to the second supply flow path in the second flow path state, and further include a third flow path that guides the liquid to be measured.

According to this flow path structure, the third flow path is connected to the second supply flow path when the liquid to be measured, that is measured in the second flow path, is introduced to the inside of the separation element accommodation part. For this reason, even when the liquid to be measured, that is measured in the second flow path, is introduced to the inside of the separation element accommodation part, the liquid to be measured that is supplied from a tank or the like flows through the second supply flow path. Consequently, when the liquid to be measured, that is measured in the second flow path, is introduced to the inside of the separation element accommodation part, it is possible to reduce a cutoff in the flow path of the liquid to be measured. Hence, when the measured liquid, that is measured in the second flow path, is introduced to the inside of the separation element accommodation part, it is possible to reduce a liquid leak. In addition, because it is possible to reduce the cutoff of the flow path of the liquid to be measured, that is supplied from the tank or the like, it is possible to reduce a pressure rise inside the flow path connected to the tank or the like. Accordingly, even in a case in which the pump is provided to apply a pressure fluctuation to the inside of the tank, it is possible to reduce damage to this pump.

In the flow path structure of the present invention, the flow path switch member may be a rotor that is rotatable inside the flow path switch member accommodation part, and a center axis of the rotor may be held by the flow path switch member accommodation part in a state in which a center axis of the rotor extends in a direction intersecting a principal plane of the base.

In addition, in the flow path structure of the present invention, the flow path switch member may be a rotor that is rotatable inside the flow path switch member accommodation part, and a center axis of the rotor may be held by the flow path switch member accommodation part in a state in which a center axis of the rotor extends in a direction parallel to a principal plane of the base.

According to these flow path structures, the flow path switch member that is provided as the rotor is rotatable inside the flow path switch member accommodation part, and is held in the flow path switch member accommodation part in a state in which the center axis of the rotor extends in the direction intersecting the principal plane of the base or in the direction parallel to the principal plane of the base. For this reason, it is possible to reduce the size of the flow path switch member, and it is possible to further reduce the size of the flow path structure.

In the flow path structure of the present invention, the rotor may have a cylindrical shape. According to this flow path structure, the flow path switch member has a relatively simple structure, and thus, it is possible to further reduce the size of the flow path structure.

In the flow path structure of the present invention, the base may be a laminated body formed by a plurality of laminated plate members. According to this flow path structure, it is possible to efficiently obtain the flow path structure having various substructures.

In the flow path structure of the present invention, the separation element may be a separation column.

In the flow path structure of the present invention, the separation element may be an electrophoretic element.

In one embodiment of the present invention, a measuring device for the liquid to be measured includes any one of the flow path structures referred above, a liquid supply part that supplies a developer solution to the flow path structure, a sample introduction part that supplies the liquid to be measured to the flow path structure, and a detector having a light emitting part that emits measuring light for measuring information related to components included in the liquid to be measured, and a light receiving part that detects the measuring light irradiated on the liquid to be measured.

According to the measuring device for the liquid to be measured, in one embodiment of the present invention, the flow path switch member switches the state of the flow path inside the base between the first flow path state in which the liquid to be measured is guided to the inside of the flow path switch member itself, and the second flow path state in which the liquid to be measured, that is guided to the inside of the flow path switch member, is guided to the inside of the separation element accommodation part. In addition, the flow path switch member holds and measures the liquid to be measured, that is guided to the inside of the flow path switch member itself, when the state of the flow path inside the base makes the transition from the first flow path state to the second flow path state. Because the flow path structure includes this flow path switch member, it is possible to reduce the number of parts of the sample introduction part. For this reason, it is easy to use the measuring device for the liquid to be measured, and the maintenance of the measuring device for the liquid to be measured is facilitated. Further, because it is possible to reduce the number of parts of the sample introduction part, it is possible to reduce the size of the measuring device for the liquid to be measured.

In order to measure the information related to the composition of the liquid to be measured with a high sensitivity, it is preferable that the volume of the flow path, between the part where the liquid to be measured is measured and the separation element accommodation part accommodating the separation element, is as small as possible. This is because, if the volume of the flow path, between the part where the liquid to be measured is measured and the separation element accommodation part accommodating the separation element, is large, the liquid to be measured diffuses in this flow path.

But according to the measuring device in one embodiment of the present invention, the flow path structure has the flow path switch member. Hence, the volume of the flow path, between the part where the liquid to be measured is measured and the separation element accommodation part accommodating the separation element, can be made small. As a result, it is possible to measure the information related to the composition of the liquid to be measured with a high sensitivity.

### EFFECTS OF THE INVENTION

According to the present invention, it is possible to provide a flow path structure to be incorporated into a measuring device that enables easy maintenance. In addition, it is possible to provide a flow path structure to be incorporated into a measuring device that enables size reduction. According to the present invention, it is possible to provide a measuring device for a liquid to be measured, having a flow path structure incorporated therein.

### BRIEF DESCRIPTION OF DRAWINGS

FIG. 1 is a block diagram illustrating a measuring device for a liquid to be measured, having a flow path structure in this embodiment;
FIG. 2 is a block diagram illustrating the measuring device for the liquid to be measured, having the flow path structure in this embodiment;
FIG. 3 is a block diagram illustrating a measuring device for the liquid to be measured, having a flow path structure in a comparison example;
FIG. 4 is a block diagram illustrating the measuring device for the liquid to be measured, having the flow path structure in the comparison example;
FIG. 5 is a schematic perspective view illustrating the flow path structure in this embodiment;
FIG. 6 is a schematic disassembled view illustrating the flow path structure in this embodiment;
FIG. 7 is a schematic perspective view illustrating a first plate member in this embodiment;
FIG. 8 is a schematic perspective view illustrating a second plate member in this embodiment;
FIG. 9 is a schematic perspective view illustrating a flow path switch member in this embodiment;
FIG. 10 is a schematic perspective view illustrating a case in which a flow path of the flow path structure in this embodiment is in a first flow path state;
FIG. 11 is a schematic perspective view illustrating a case in which the flow path of the flow path structure in this embodiment is in a second flow path state;
FIG. 12 is a schematic perspective view illustrating another flow path structure in this embodiment;
FIG. 13 is a schematic cross sectional view illustrating the other flow path structure in this embodiment;
FIG. 14 is a schematic disassembled view illustrating the other flow path structure in this embodiment;
FIG. 15 is a schematic perspective view illustrating the first plate member in this embodiment;
FIG. 16 is a schematic perspective view illustrating the second plate member in this embodiment;
FIG. 17 is a schematic perspective view illustrating a third plate member in this embodiment;
FIG. 18 is a schematic perspective view illustrating the flow path switch member in this embodiment;
FIG. 19 is a schematic perspective view illustrating the case in which the flow path of the flow path structure in this embodiment is in the first flow path state;
FIG. 20 is a schematic perspective view illustrating the case in which the flow path of the flow path structure in this embodiment is in the second flow path state;
FIG. 21 is a schematic perspective view illustrating still another flow path structure in this embodiment;
FIG. 22 is a schematic cross sectional view illustrating the still other flow path structure in this embodiment;
FIG. 23 is a schematic plan view illustrating the still other flow path structure in this embodiment;
FIG. 24 is a schematic disassembled view illustrating the still other flow path structure in this embodiment;
FIG. 25 is a schematic perspective view illustrating the first plate member in this embodiment;
FIG. 26 is a schematic perspective view illustrating the second plate member in this embodiment;
FIG. 27 is a schematic perspective view illustrating the third plate member in this embodiment;
FIG. 28 is a schematic perspective view illustrating the flow path switch member in this embodiment;
FIG. 29 is a schematic perspective view illustrating only a flow path part in this embodiment;
FIG. 30 is a schematic perspective view illustrating a still yet another flow path structure in this embodiment;
FIG. 31 is a schematic cross sectional view illustrating the still yet another flow path structure in this embodiment;
FIG. 32 is a schematic disassembled view illustrating the still yet another flow path structure in this embodiment;
FIG. 33 is a schematic plan view illustrating the still yet another flow path structure in this embodiment;
FIG. 34 is a schematic perspective view illustrating the first plate member in this embodiment;
FIG. 35 is a schematic perspective view illustrating the second plate member in this embodiment; and
FIG. 36 is a schematic perspective view illustrating the flow path switch member in this embodiment.

### MODE OF CARRYING OUT THE INVENTION

A flow path structure and a measuring device for a liquid to be measured, in one embodiment of the present invention, will be described with reference to the drawings. In the following description, identical members are designated by identical reference numerals, and a description of the identical members is not repeated and will be omitted where appropriate.

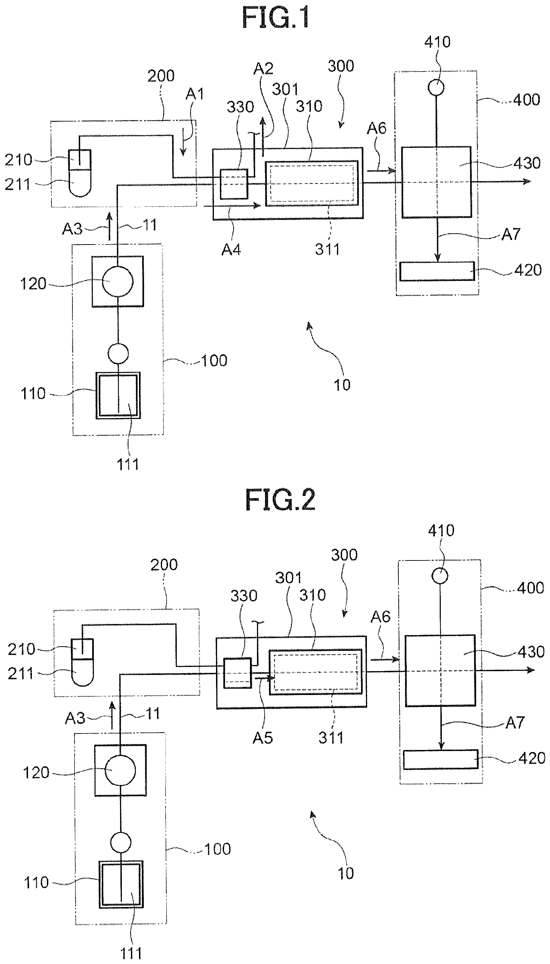

FIG. 1 and FIG. 2 are block diagrams illustrating a measuring device for a liquid to be measured, having a flow path structure in this embodiment.

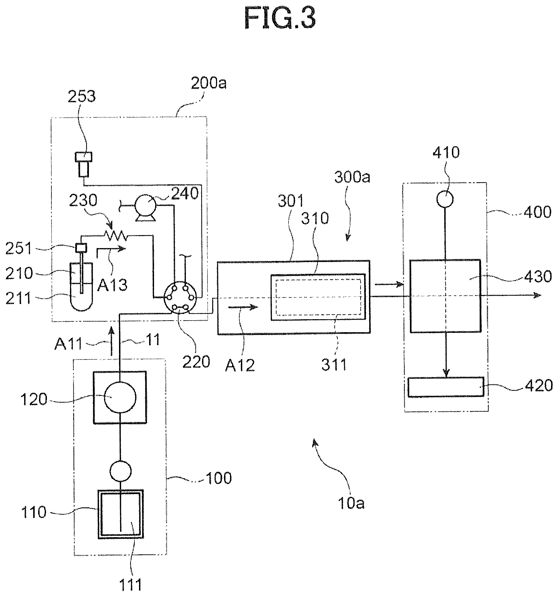

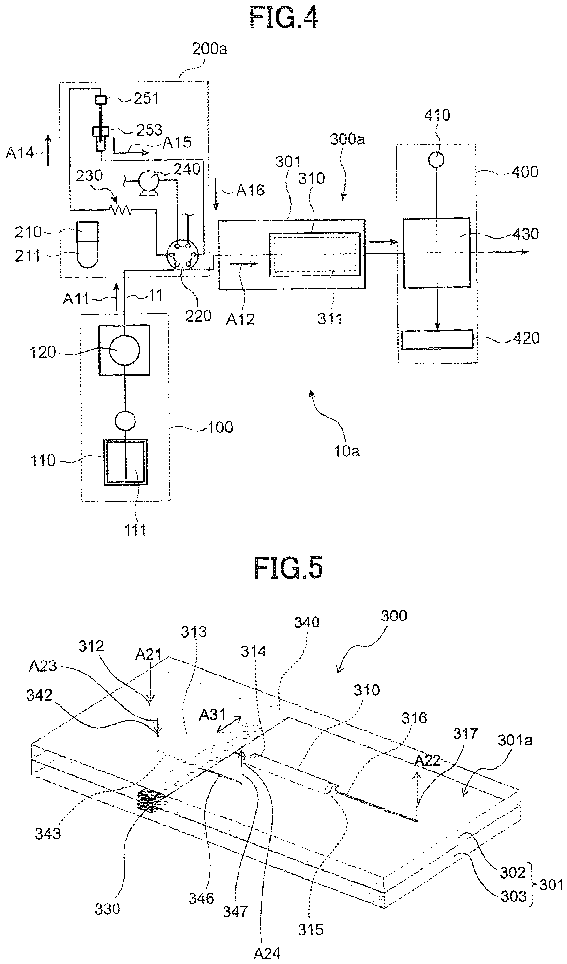

FIG. 3 and FIG. 4 are block diagrams illustrating a measuring device for the liquid to be measured, having a flow path structure in a comparison example.

FIG. 1 and FIG. 3 illustrate a state before the flow path structure measures the liquid to be measured. FIG. 2 illustrates a state in which the flow path structure introduces the liquid to be measured into a separation element accommodation part 310.

As illustrated in FIG. 1 and FIG. 2, a measuring device 10 for the liquid to be measured in this embodiment has a liquid supply part 100, a sample introduction part 200, a flow path structure 300, and a detector 400.

The liquid supply part 100 has a storage part 110, and a pump 120. The storage part 110 stores a developer solution 111 as a mobile phase. The pump 120 applies a pressure fluctuation to an inside of the storage part 110, to supply the developer solution 111 stored in the storage part 110 to the flow path structure 300.

The sample introduction part (injection part) 200 has a tank 210. The tank 210 stores a liquid (sample) 211 to be measured. The sample introduction part 200 can supply the liquid 211 to be measured, that is stored in the tank 210, to the flow path structure 300, to mix the liquid 211 to be measured and the developer solution 111 supplied from the storage part 110. Details of the mixing of the liquid 211 to be measured and the developer solution 111 will be described later.

The flow path structure 300 has a base 301, and a flow path switch member 330. The base 301 has the separation element accommodation part 310. The separation element accommodation part 310 accommodates a separation element (separation column) 311. The separation element 311 utilizes differences in interactions between the separation element 311 and each of components included in the liquid 211 to be measured, to separate each of the components included in the liquid 211 to be measured. More particularly, the separation element 311 utilizes differences in moving velocities based on differences in adsorptivity and distribution coefficient of each of the components included in the liquid 211 to be measured, for example, to separate each of the components included in the liquid 211 to be measured. For example, in a case in which the liquid 21 to be measured is blood, the separation element 311 separates the components included in the blood, according to a size and a charge state of molecules. For example, a silica monolith may be used as the separation element 311.

The flow path switch member 330 switches a state of a flow path that guides the liquid 211 to be measured and the developer solution 111, between a first flow path state and a second flow path state. In other words, the flow path switch member 330 switches the state of the flow path inside the base 301, between the first flow path state and the second flow path state. In the first flow path state, the liquid 211 to be measured flows inside the flow path switch member 330, and is guided to an outside of the separation element accommodation part 310 (refer to FIG. 1). In the second flow path state, the liquid 211 to be measured, that is guided to the inside of the flow path switch member 330, is introduced inside the separation element accommodation part 310 (refer to FIG. 2).

More particularly, in the first flow path state, the liquid 211 to be measured, stored in the tank 210, flows inside the flow path switch member 330, and is guided to the outside of the separation element accommodation part 310, as indicated by an arrow A1 and an arrow A2 illustrated in FIG. 1. In addition, in the first flow path state, the developer solution 111 stored in the storage part 110 passes through a supply pipe 11, and passes through the inside of the flow path switch member 330, to be guided to the inside of the separation element accommodation part 310, as indicated by an arrow A3 and an arrow A4 illustrated in FIG. 1.

Next, when the state of the flow path inside the base 301 makes a transition from the first flow path state to the second flow path state, the liquid 211 to be measured is temporarily held inside the flow path switch member 330, to be separated from other liquids. Hence, the flow path switch member 330 measures the liquid 211 to be measured. Details of particular forms of measuring the liquid 211 to be measured by the flow path switch member 330 will be described later.

On the other hand, in the second flow path state, the liquid 211 to be measured, that is temporarily held inside the flow path switch member 330, is guided to the inside of the separation element accommodation part 310 in association with the flow of the developer solution 111, as indicated by an arrow A5 illustrated in FIG. 2. More particularly, in the second flow path state, the developer solution 111 passes through the inside of the flow path switch member 330, to be guided to the inside of the separation element accommodation part 310, similarly as in the first flow path state. For this reason, the liquid 211 to be measured, that is temporarily held inside the flow path switch member 330, is mixed with the developer solution 111, to be guided inside the separation element accommodation part 310. In this state, the liquid 211 to be measured, that is temporarily held inside the flow path switch member 330, is measured by the flow path switch member 330, and thus, a measured amount of the liquid 211 to be measured is guided to the inside of the separation element accommodation part 310.

The storage part 110 may be provided in the flow path structure 300. In other words, the flow path structure 300 may include the storage part 110. In this case, the developer solution 111 stored in the storage part 110 is supplied to the separation element accommodation part 310 based on the pressure fluctuation applied from the pump 120 to the inside of the storage part 110. In the case in which the storage part 110 is provided in the flow path structure 300, the flow path structure 300 is incorporated into the measuring device 10 as a measuring unit that includes the developer solution 111 stored in the storage part 110.

In addition, the liquid 211 to be measured, that is stored in the tank 210, may be guided to the flow path structure 300 by applying a pressure fluctuation from a pump that is not illustrated to the inside of the tank 210. Alternatively, the liquid 211 to be measured, that is stored in the tank 210, may be guided to the flow path structure 300 by a user of the measuring device 10 by applying the pressure fluctuation to the inside of the tank 210 using a cylinder or the like, for example.

I The detector 400 has a light emitting part 410, a detector part 430, and a light receiving part 420. The light emitting part 410 emits measuring light towards the detector part 430. A wavelength of the light emitted from the light emitting part 410 is on the order of approximately 250 nanometers (nm) or longer and approximately 450 nm or shorter, for example. However, the wavelength of the light emitted from the light emitting part 410 is not limited to such a wavelength range.

The detector part 430 functions both as a discharging flow path for discharging a mixture (mixture of the developer solution 111 and the liquid 211 to be measured) that passes through the separation element 311, and a measuring flow path for guiding the liquid 211 to be measured irradiated with the measuring light emitted from the light emitting part 410.

More particularly, as indicated by an arrow A6 illustrated in FIG. 2, the mixture of the developer solution 111 and the liquid 211 to be measured passes through the separation element 311, and after being separated into each of the components, passes through the detector part 430 to be discharged from the detector part 430. In this state, the measuring light emitted from the light emitting part 410 is irradiated on the mixture that passes through the detector part 430. As indicated by an arrow A7 illustrated in FIG. 2, at least a part of the measuring light irradiated on the mixture is transmitted through the mixture and reaches the light receiving part 420. The light receiving part 420 detects the light transmitted through the mixture, and calculates a concentration of each of the components included in the liquid 211 to be measured, based on an intensity of the detected light. The light receiving part 420 may store the calculated concentration of each of the components.

Next, an example of a method of measuring the liquid to be measured in this embodiment will be described.

First, as indicated by the arrow A3 illustrated in FIG. 1, the pump 120 is driven, and the developer solution 111 inside the storage part 110 is supplied to the supply pipe 11, to fill the detector part 430 with the developer solution 111. In addition, as indicated by the arrow A1 and the arrow A2 illustrated in FIG. 1, the liquid 211 to be measured, that is stored in the tank 210, is supplied to the inside of the flow path switch member 330 and guided to the outside of the separation element accommodation part 310. In other words, the flow path switch member 330 sets the state of the flow path of the flow path structure 300 to the first flow path state.

Next, the pump 120 is stopped, and the flow path switch member 330 switches the state of the flow path of the flow path structure 300 from the first flow path state to the second flow path state. In this state, the liquid 211 to be measured is temporarily held inside the flow path switch member 330, to be separated from the other liquids. Accordingly, the liquid 211 to be measured is measured by the flow path switch member 330. Then, the pump 120 is driven again. Consequently, as indicated by the arrow A5 illustrated in FIG. 2, the liquid 211 to be measured, that is temporarily held inside the flow path switch member 330, and is measured by the flow path switch member 330, is mixed with the developer solution 111 and guided to the inside of the separation element accommodation part 310.

Hence, the mixture of the measured liquid 211 and the developer solution 111 is supplied to the separation element 311, to perform the separation of the liquid 211 to be measured. Next, the measuring light emitted from the light emitting part 410 is irradiated on the mixture passing through the detector part 430, and the light receiving part 420 detects the light transmitted through the mixture, to obtain information related to a composition of the liquid 211 to be measured.

A measuring device 10a in a comparison example illustrated in FIG. 3 and FIG. 4 will be described.

As illustrated in FIG. 3 and FIG. 4, the measuring device 10a in the comparison example has the liquid supply part 100, a sample introduction part 200a, a flow path structure 300a, and the detector 400. The liquid supply part 100 of the measuring device 10a in the comparison example is the same as the liquid supply part 100 of the measuring device 10 in this embodiment. In addition, the detector 400 of the measuring device 10a in the comparison example is the same as the detector 400 of the measuring device 10 in this embodiment. The flow path structure 300a includes the base 301 that is provided with the separation element accommodation part 310, but does not include the flow path switch member 330 described above in conjunction with FIG. 1 and FIG. 2.

The sample introduction part 200a of the measuring device 10a in the comparison example has the tank 210 that stores the liquid 211 to be measured, a flow path switch valve 220, a sample loop 230, a measuring pump 240, a needle 251, and an injection port 253. The flow path switch valve 220 switches a state of a flow path that guides the liquid 211 to be measured and the developer solution 111.

In a state of the flow path illustrated in FIG. 3, the needle 251 is connected to the tank 210. As indicated by an arrow A11 and an arrow A12 illustrated in FIG. 3, the developer solution 111 stored in the storage part 110 passes through the supply pipe 11, and is guided to the inside of the separation element accommodation part 310. As indicated by an arrow A13 illustrated in FIG. 3, when the measuring pump 240 is driven, the liquid 211 to be measured, that is stored in the tank 210, is guided to the sample loop 230 via the needle 251. Hence, measurement of the liquid 211 to be measured is performed in the sample loop 230.

In a state of the flow path illustrated in FIG. 4, the needle 251 is connected to the injection port 253. As indicted by an arrow A14, an arrow A15, an arrow A16, and the arrow A12 illustrated in FIG. 4, the liquid 211 to be measured, that is measured in the sample loop 230, is guided to the inside of the separation element accommodation part 310 via the needle 251, the injection port 253, and the flow path switch valve 220. In addition, as indicated by the arrow A11, the arrow A14, the arrow A15, the arrow A16, and the arrow A12 illustrated in FIG. 4, the developer solution 111 stored in the storage part 110 passes through the flow path switch valve 220 again, via the flow path switch valve 220, the sample loop 230, the needle 251, and the injection port 253, and is guided to the inside of the separation element accommodation part 310. For this reason, the liquid 211 to be measured, that is measured in the sample loop 230, is mixed with the developer solution 111 and guided to the inside of the separation element accommodation part 310.

Recently, POCT (Point-Of-Care Testing), that refers to simple and rapid tests or the like conducted by medical personnel at medical examination and nursing sites, is becoming popular. From a viewpoint of performing the POCT, the HPLC device is preferably simple to use. In addition, the HPLC device preferably has a small size.

However, the sample introduction part 200a of the measuring device 10a in the comparison example has a relatively large number of parts, and it is difficult to use the measuring device 10a without expert knowledge of the measuring device 10a. In addition, because it is difficult to use the measuring device 10a, the maintenance of the measuring device 10a is difficult to perform. Further, because the sample introduction part 200a of the measuring device 10a in the comparison example has the flow path switch valve 220, it is difficult to reduce the size of the measuring device 10a.

On the other hand, the flow path structure 300 of the measuring device 10 in this embodiment has the flow path switch member 330. As described above in conjunction with FIG. 1 and FIG. 2, the flow path switch member 330 switches the state of the flow path of the flow path structure 300 between the first flow path state and the second flow path state. In other words, the flow path switch member 330 switches the state of the flow path of the flow path structure, between the first flow path state in which the liquid 211 to be measured flows through the inside of the flow path switch member 330 and is guided to the outside of the separation element accommodation part 310, and the second flow path state in which the liquid 211 to be measured, that is measured in the flow path switch member 330, is guided to the inside of the separation element accommodation part 310.

According to the measuring device 10 in this embodiment, the flow path structure 300 has the flow path switch member 330. Hence, compared to the sample introduction part 200a of the comparison example, it is possible to reduce the number of parts of the sample introduction part 200. For this reason, it is easy to use the measuring device 10 in this embodiment, and it is easy to perform the maintenance of the measuring device 10. In addition, because the number of parts of the sample introduction part 200 can be reduced compared to the sample introduction part 200a of the comparison example, it is possible to reduce the size of the measuring device 10.

In order to measure the information related to the composition of the liquid 211 to be measured with a high sensitivity, it is preferable that a volume of the flow path, between the part where the liquid 211 to be measured is measured and the separation element accommodation part 310 accommodating the separation element 311, is as small as possible. This is because, if the volume of the flow path, between the part where the liquid 211 to be measured is measured and the separation element accommodation part 310 accommodating the separation element 311, is large, the liquid 211 to be measured diffuses in this flow path.

But according to the measuring device 10 in this embodiment, the flow path structure 300 has the flow path switch member 330. Hence, compared to the sample introduction part 200a in the comparison example, the volume of the flow path, between the part where the liquid 211 to be measured is measured and the separation element accommodation part 310 accommodating the separation element 311, can be made small. As a result, it is possible to measure the information related to the composition of the liquid 211 to be measured with a high sensitivity.

Next, particular examples of the flow path structure in this embodiment will be described with reference to the drawings.

FIG. 5 is a schematic perspective view illustrating the flow path structure in this embodiment.

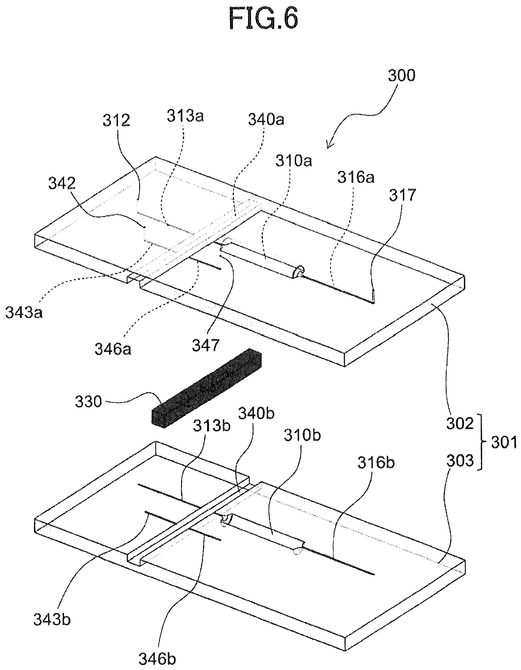

FIG. 6 is a schematic disassembled view illustrating the flow path structure in this embodiment.

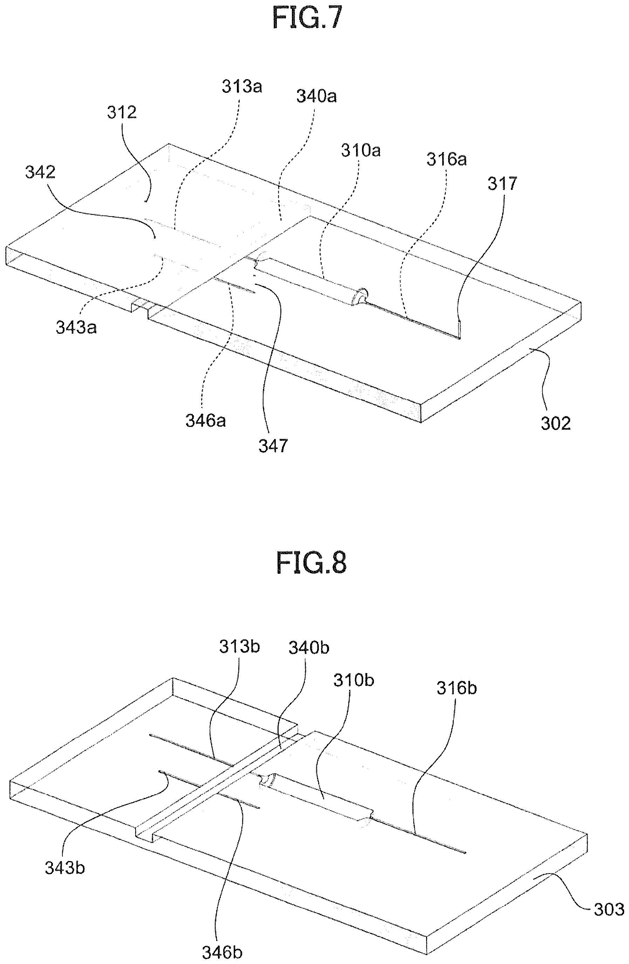

FIG. 7 is a schematic perspective view illustrating a first plate member in this embodiment.

FIG. 8 is a schematic perspective view illustrating a second plate member in this embodiment.

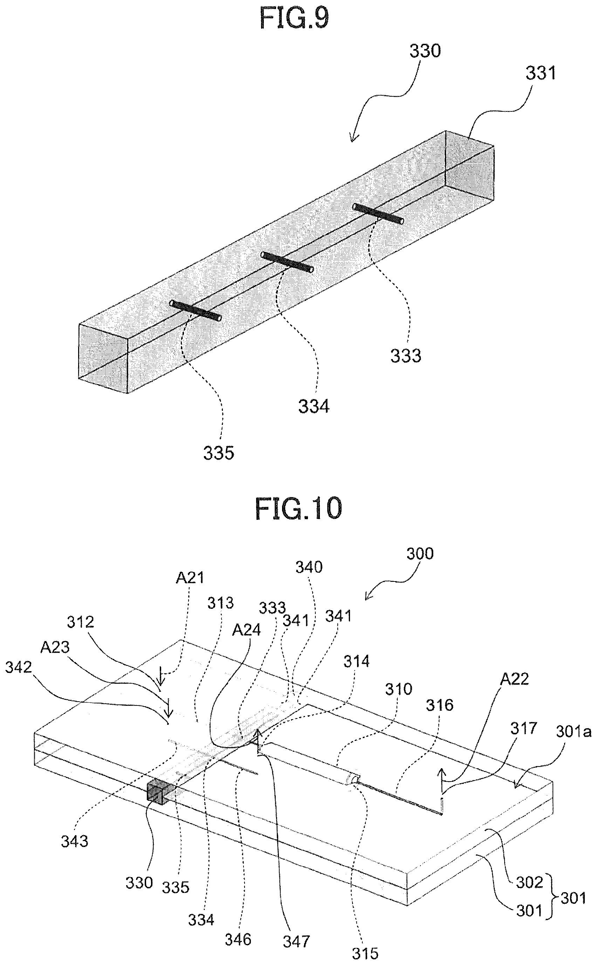

FIG. 9 is a schematic perspective view illustrating a flow path switch member in this embodiment.

The flow path structure 300 illustrated in FIG. 5 and FIG. 6 has the base 301, and the flow path switch member 330. The base 301 has a first plate member 302 and a second plate member 303, and the first plate member 302 and the second plate member 303 are laminated to form a laminated body. Each of the first plate member 302 and the second plate member 303 is made of a transparent material. In other words, each of the first plate member 302 and the second plate member 303 has transparency with respect to a wavelength region of the measuring light. Examples of the transparent material include glass, acrylic resin materials, cycloolefin resin materials, polyester resin materials, or the like. From viewpoints of manufacturing ease and wideness of the transparent wavelength range, at least one of the first plate member 302 and the second plate member 303 is preferably made of a cycloolefin resin material, and both of the first plate member 302 and the second plate member 303 are more preferably made of the cycloolefin resin material.

The base 301 has the separation element accommodation part 310, a first supply flow path 313, and a first discharge flow path 316. More particularly, as illustrated in FIG. 6 and FIG. 7, the first plate member 302 is provided with a part 310a of the separation element accommodation part 310, a part 313a of the first supply flow path 313, and a part 316a of the first discharge flow path 316. On the other hand, as illustrated in FIG. 6 and FIG. 8, the second plate member 303 is provided with a part 310b of the separation element accommodation part 310, a part 313b of the first supply flow path 313, and a part 316b of the first discharge flow path 316. By laminating the first plate member 302 and the second plate member 302 together, the separation element accommodation part 310, the first supply flow path 313, and the first discharge flow path 316 are formed on the base 301.

Both ends of the separation element accommodation part 310 are formed as open ends 314 and 315. The separation element 311 is accommodated within the separation element accommodation part 310 between the two open ends 314 and 315.

One end part of the first supply flow path 313 is formed as an opening 312. The other end part of the first supply flow path 313 is connected to one open end 314 of the separation element accommodation part 310. As indicated by an arrow A21 illustrated in FIG. 5, the first supply flow path 313 is connected to the supply pipe 11 (refer to FIG. 1) of the measuring device 10, and guides the developer solution 111 supplied through the supply pipe 11 of the measuring device 10 to the inside of the flow path structure 300 through the opening 312.

One end part of the first discharge flow path 316 is connected to the other open end 315 of the separation element accommodation part 310. The other end part of the first discharge flow path 316 is formed as an opening 317. As indicated by an arrow A22 illustrated in FIG. 5, the first discharge flow path 316 discharges the developer solution 111 that passes through the separation element 311, the liquid 211 to be measured, or the mixture of the developer solution 111 and the liquid 211 to be measured, through the opening 317 to the outside of the flow path structure 300.

More particularly, as illustrated in FIG. 9, the flow path switch member 330 has a flow path switch body 331. The flow path switch body 331 has a rectangular parallelepiped shape. For example, the material forming the flow path switch body 331 is the same as the material forming the base 301. However, the material forming the flow path switch body 331 does not necessarily be the same as the material forming the base 301. The flow path switch body 331 has a first flow path 333, a second flow path 334, and a third flow path 335. Each of the first flow path 333, the second flow path 334, and the third flow path 335 penetrates the flow path switch body 331. In other words, both ends of each of the first flow path 333, the second flow path 334, and the third flow path 335 are formed as openings.

When one of the first flow path 333, the second flow path 334, and the third flow path 335 is connected to the first supply flow path 313, the developer solution 111 flowing through the first supply flow path 313 passes through the one of the first flow path 333, the second flow path 334, and the third flow path 335 connected to the first supply flow path 313, and flows through the separation element 311 and the first discharge flow path 316. Hence, as indicated by the arrow A21 and the arrow A22 illustrated in FIG. 5, the developer solution 111 that is stored in the storage part 110 passes through the opening 312 to flow through the first supply flow path 313, passes through the flow path switch member 330, and flows through the separation element 311 and the first discharge flow path 316, to be discharged from the opening 317.

In addition, the base 301 has a flow path switch member accommodation part 340, a second supply flow path 343, and a second discharge path 346. More particularly, as illustrated in FIG. 6 and FIG. 7, the first plate member 302 is provided with a part 340a of the flow path switch member accommodation part 340, a part 343a of the second supply flow path 343, and a part 346a of the second discharge flow path 346. On the other hand, as illustrated in FIG. 6 and FIG. 8, the second plate member 303 is provided with a part 340b of the flow path switch member accommodation part 340, a part 343b of the second supply flow path 343, and a part 346b of the second discharge flow path 346. By laminating the first plate member 302 and the second plate member 302 together, the flow path switch member accommodation part 340, the second supply flow path 343, and the second discharge flow path 346 are formed on the base 301.

As illustrated in FIG. 5, the flow path switch member accommodation part 340 extends in a direction parallel to a principal plane 301a of the base 301, and is provided at an intermediate part of the flow path that guides the liquid 211 to be measured to the separation element accommodation part 310. In the flow path structure 300 in this embodiment, the flow path switch member accommodation part 340 traverses between the first supply flow path 313 and the second supply flow path 343. As indicated by an arrow A31 illustrated in FIG. 5, the flow path switch member 330 moves linearly in a direction intersecting the first supply flow path 313 and the second supply flow path 343. In other words, the flow path switch member 330 is accommodated within the flow path switch member accommodation part 340, and is movable (more particularly, slide) inside the flow path switch member accommodation part 340 in a direction in which the flow path switch member accommodation part 340 extends.

The second supply flow path 343 is arranged side by side with the first supply flow path 313 in a direction parallel to the principal plane 301a of the base 301. The second discharge flow path 346 is arranged side by side with the first discharge flow path 316 in a direction parallel to the principal plane 301a of the base 301.

One end part of the second supply flow path 343 is formed as an opening 342. The other end part of the second supply flow path 343 is connected to the flow path switch member accommodation part 340. As indicated by an arrow A23 illustrated in FIG. 5, the second supply flow path 343 guides the liquid 211 to be measured, that is supplied from the tank 210, to the inside of the flow path structure 300 through the opening 342.

One end part of the second discharge flow path 346 is connected to the flow path switch member accommodation part 340. The other end part of the second discharge flow path 346 is formed as an opening 347. As indicated by an arrow A24 illustrated in FIG. 5, the second discharge flow path 346 discharges the liquid 211 to be measured, that passes through the flow path switch member 330, through the opening 347 to the outside of the flow path structure 300.

More particularly, when one of the first flow path 333, the second flow path 334, and the third flow path 335 is connected to the second supply flow path 343 and the second discharge flow path 346, the liquid 211 to be measured, that passes through the second supply flow path 343, passes through the one of the first flow path 333, the second flow path 334, and the third flow path 335 connected to the second supply flow path 343, and flows through the second discharge flow path 346. Hence, as indicated by the arrow A23 and the arrow A24 illustrated in FIG. 5, the liquid 211 to be measured, that is supplied from the tank 210, flows to the second supply flow path 343 through the opening 342, and passes through the flow path switch member 330, and flows to the second discharge flow path 346, to be discharged through the opening 347.

The flow path switch body 331 does not necessarily have to include the third flow path 335.

FIG. 10 is a schematic perspective view illustrating a case in which the flow path of the flow path structure in this embodiment is in the first flow path state.

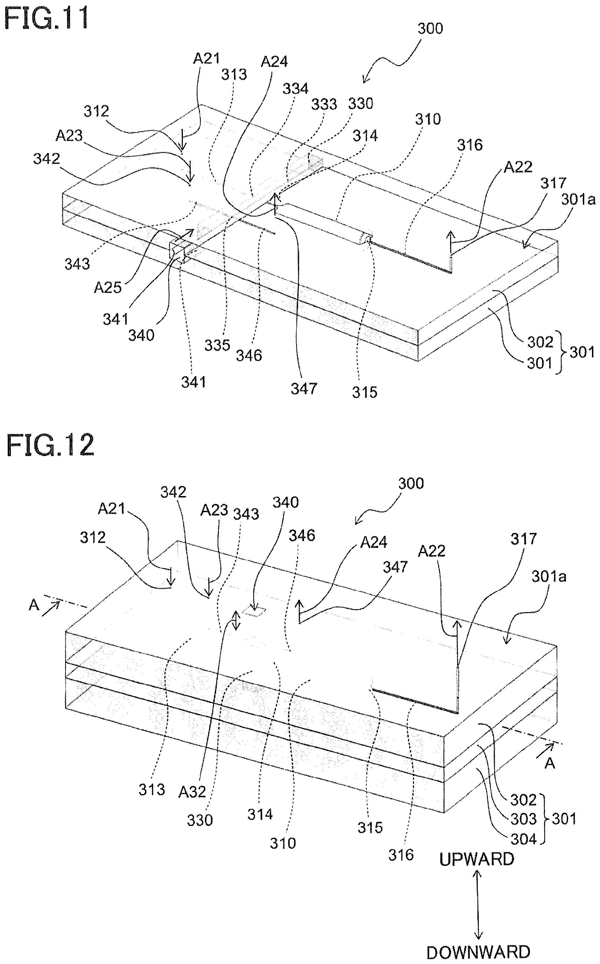

FIG. 11 is a schematic perspective view illustrating a case in which the flow path of the flow path structure in this embodiment is in the second flow path state.

The method of measuring the liquid 211 to be measured using the flow path structure 300 in this embodiment will be described, by referring to FIG. 10 and FIG. 11.

First, as illustrated in FIG. 10, when starting the measurement, the first flow path 333 of the flow path switch member 330 is connected to the first supply flow path 313. On the other hand, the second flow path 334 of the flow path switch member 330 is connected to the second supply flow path 343 and the second discharge flow path 346. In other words, the flow path switch member 330 sets the state of the flow path of the flow path structure 300 to the first flow path state.

Next, as indicated by the arrow A21 illustrated in FIG. 10, the pump 120 is driven, and the developer solution 111 inside the storage part 110 is guided to the first supply flow path 313 through the opening 312. Then, as indicated by the arrow A22 illustrated in FIG. 10, the developer solution 111 flows through the first flow path 333 of the flow path switch member 330, the separation element 311, and the first discharge flow path 316, and is discharged from the opening 317.

On the other hand, as indicated by the arrow A23 illustrated in FIG. 10, a pressure fluctuation is applied to the inside of the tank 210, and the liquid 211 to be measured, inside the tank 210, is guided to the second supply flow path 343 through the opening 342. Then, as indicated by the arrow A24 illustrated in FIG. 10, the liquid 211 to be measured flows through the second flow path 334 of the flow path switch member 330 and the second discharge flow path 346, and is discharged from the opening 347. For this reason, in the first flow path state, the second flow path 334 is filled by the liquid 211 to be measured.

Next, as indicated by an arrow A25 illustrated in FIG. 11, the pump 120 is stopped, and the flow path switch member 330 is moved. Then, when the state of the flow path inside the base 301 makes a transition from the first flow path state to the second flow path state, the openings at both ends of the second flow path 334 of the flow path switch member 330 are closed by sliding surfaces 341 opposing the flow path switch member 330. Hence, a closed space is formed by the second flow path 334 and the sliding surfaces 341. For this reason, the liquid 211 to be measured, flowing through the second flow path 334, is temporarily held in the closed space that is formed by the second flow path 334 and the sliding surfaces 341, to be separated from other liquids.

A volume of the second flow path 334 of the flow path switch member 330 does not change and is constant. For this reason, the flow path switch member 330 can measure the liquid 211 to be measured, flowing through the second flow path 334. In other words, the measurement of the liquid 211 to be measured is performed in the second flow path 334 of the flow path switch member 330. The second flow path 334 of the flow path switch member 330 corresponds to a sample measuring part that measures the liquid 211 to be measured.

When the flow path switch member 330 is moved further in the direction of the arrow A25 illustrated in FIG. 11, the second flow path 334 is connected to the first supply flow path 313. In addition, the third flow path 335 of the flow path switch member 330 is connected to the second supply flow path 343 and the second discharge flow path 346. In other words, the flow path switch member 330 switches the state of the flow path of the flow path structure 300 from the first flow path state to the second flow path state. Thereafter, the pump 120 is driven again.

Then, the measured amount of the liquid 211 to be measured is guided to the inside of the separation element accommodation part 310 in association with the flow of the developer solution 111. More particularly, the liquid 211 to be measured, that is temporarily held in the closed space formed by the second flow path 334 of the flow path switch member 330 and the sliding surfaces 341, and is measured in the second flow path 334 of the flow path switch member 330, is mixed with the developer solution 111 and guided to the inside of the separation element accommodation part 310. Hence, the flow path switch member 330 functions as a flow path switching part and the sample measuring part.

Accordingly, the mixture of the measured liquid 211 and the developer solution 111 is supplied to the separation element 311. In addition, the separation of the liquid 211 to be measured is performed. Next, the mixture of the liquid 211 to be measured and the developer solution 111 flows through the first discharge flow path 316 and is discharged from the opening 317. Next, the detector part 430 obtains the information related to the composition of the liquid 211 to be measured.

According to the flow path structure 300 in this embodiment, it is possible to reduce the number of parts of the sample introduction part 200 (refer to FIG. 1) of the measuring device 10, because the flow path switch member 330 is provided on the base 301. For this reason, the measuring device 10 in this embodiment can be used with ease. In addition, the flow path switch member 330 can be changed after performing the measurement one or a plurality of times. Consequently, it is easy to attend to the maintenance of the measuring device 10. Further, because it is possible to reduce a volume of the flow path between the part (second flow path 334) where the measurement of the liquid 211 to be measured takes place, and the separation element accommodation part 310 that accommodates the separation element 311, the information related to the composition of the liquid 211 to be measured can be measured with a high sensitivity.

As described above, the flow path switch member 330 in this embodiment has the third flow path 335. The third flow path 335 is connected to the second supply flow path 343 and the second discharge flow path 346 when the liquid 211 to be measured is introduced to the inside of the separation element accommodation part 310. For this reason, even when the measured liquid 211 is introduced to the inside of the separation element accommodation part 310, the liquid 211 to be measured, that is supplied from the tank 210, flows through the second supply flow path 343, and is guided to the second discharge flow path 346 through the third flow path 335 of the flow path switch member 330. In other words, when the measured liquid 211 is introduced to the inside of the separation element accommodation part 310, the third flow path 335 guides the liquid 211 to be measured, that is supplied from the tank 210, to the second discharge flow path 346.

For this reason, when the measured liquid 211 is guided to the inside of the separation element accommodation part 310, it is possible to reduce a cutoff in the flow path of the liquid 211 to be measured, that is supplied from the tank 210. Hence, when the measured liquid 211 is introduced to the inside of the separation element accommodation part 310, it is possible to reduce a liquid leak. In addition, because it is possible to reduce the cutoff of the flow path of the liquid 211 to be measured, that is supplied from the tank 210, it is possible to reduce a pressure rise inside the flow path connected to the tank 210. Accordingly, even in a case in which a pump that is not illustrated is provided to apply the pressure fluctuation to the inside of the tank 210, it is possible to reduce damage to this pump.

FIG. 12 is a schematic perspective view illustrating another flow path structure in this embodiment.

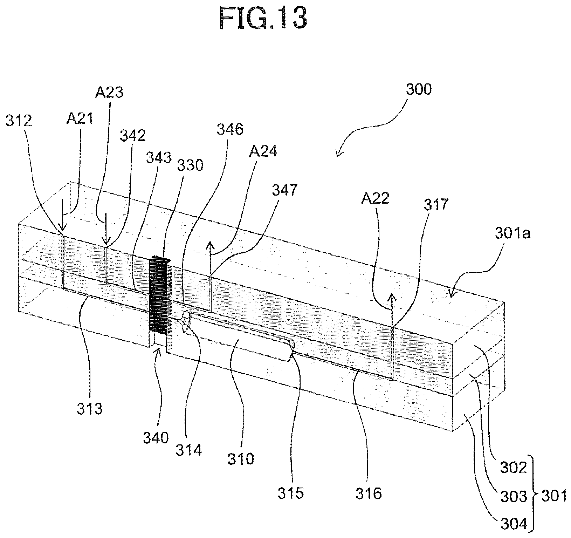

I FIG. 13 is a schematic cross sectional view illustrating the other flow path structure in this embodiment.

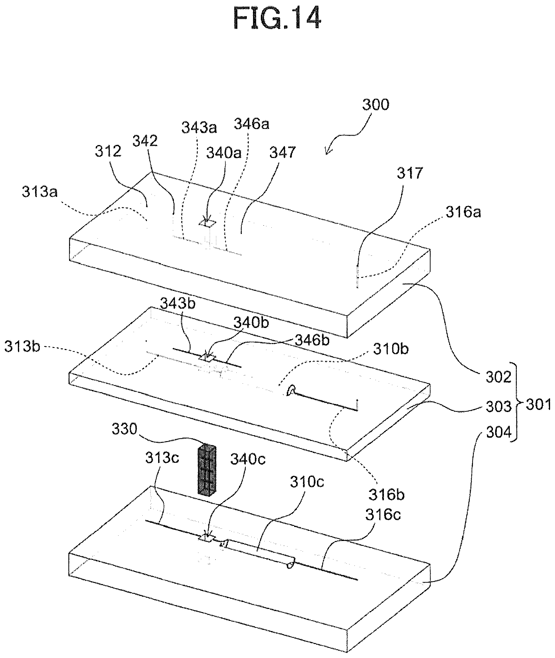

FIG. 14 is a schematic disassembled view illustrating the other flow path structure in this embodiment.

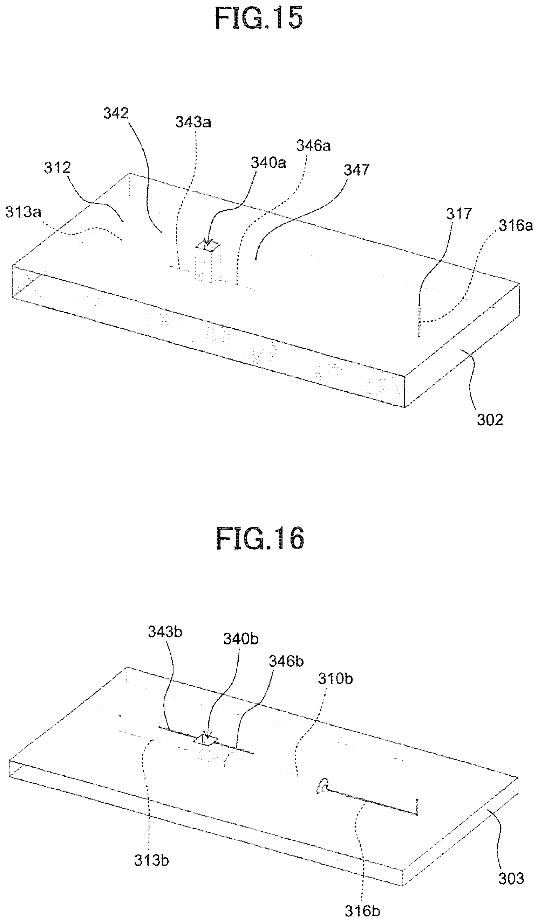

FIG. 15 is a schematic perspective view illustrating the first plate member in this embodiment.

FIG. 16 is a schematic perspective view illustrating the second plate member in this embodiment.

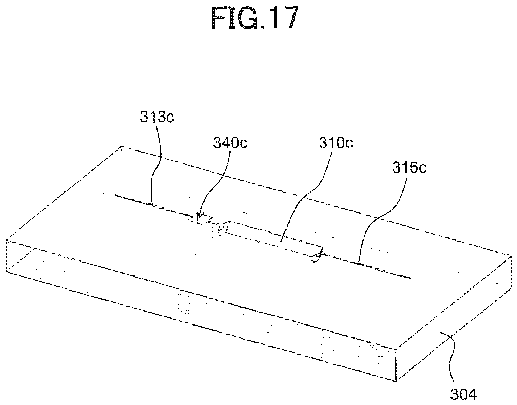

FIG. 17 is a schematic perspective view illustrating a third plate member in this embodiment.

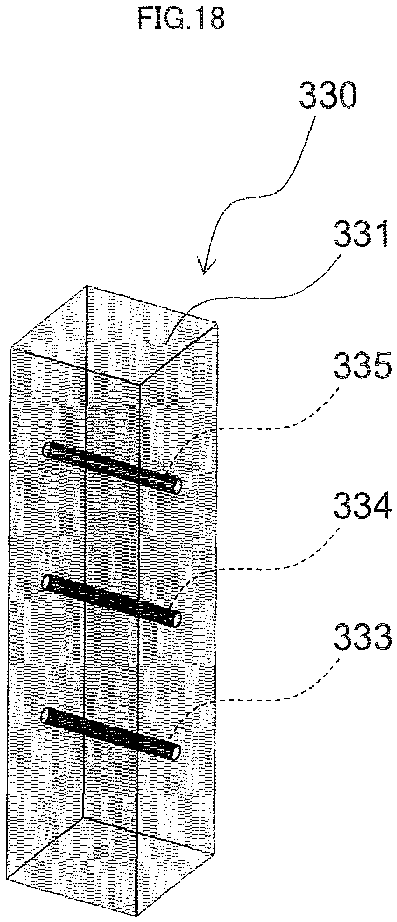

FIG. 18 is a schematic perspective view illustrating the flow path switch member in this embodiment.

FIG. 13 is the schematic cross sectional view along a cutting plane A-A illustrated in FIG. 12.

A flow path structure 300 illustrated in FIG. 12 through FIG. 14 has the base 301, and the flow path switch part 330. The base 301 has the first plate member 302, the second plate member 303, and the third plate member 304. The first plate member 302, the second plate member 303, and the third plate member 304 are laminated to form the laminated body. The materials forming the first plate member 302, the second plate member 303, and the third plate member 304 are the same as the materials forming the first plate member 302 and the second plate member 303 described above with reference to FIG. 5 through FIG. 11.

The first supply flow path 313 is arranged side by side with the second supply flow path 343 in a direction intersecting the principal plane 301a of the base 301. In the flow path structure 300 illustrated in FIG. 12, the first supply flow path 313 is arranged side by side with the second supply flow path 343 in a direction perpendicular to the principal plane 301a of the base 301. In addition, the first discharge flow path 316 is arranged side by side with the second discharge flow path 346 in a direction perpendicular to the principal plane 301a of the base 301.

More particularly, as illustrated in FIG. 14 and FIG. 15, the first plate member 302 is provided with the part 340a of the flow path switch member accommodation part 340, the part 313a of the first supply flow path 313, the part 316a of the first discharge flow path 316, the part 343a of the second supply flow path 343, and the part 346a of the second discharge flow path 346.

As illustrated in FIG. 14 and FIG. 16, the second plate member 303 is provided with the part 340b of the flow path switch member accommodation part 340, the part 310b of the separation element accommodation part 310, the part 313b of the first supply flow path 313, the part 316b of the first discharge flow path 316, the part 343b of the second supply flow path 343, and the part 346b of the second discharge flow path 346.

As illustrated in FIG. 14 and FIG. 17, the third plate member 304 is provided with a part 340c of the flow path switch member accommodation part 340, a part 310c of the separation element accommodation part 310, a part 313c of the first supply flow path 313, and a part 316c of the first discharge flow path 316.

By mutually laminating the first plate member 302 and the second plate member 303, and the second plate member 303 and the third plate member 304, the flow path switch member accommodation part 340, the separation element accommodation part 310, the first supply flow path 313, the first discharge flow path 316, the second supply flow path 343, and the second discharge flow path 346 are formed on the base 301.

As illustrated in FIG. 12 and FIG. 13, the second supply flow path 343 and the second discharge flow path 346 are provided on an upper side of the separation element accommodation part 310, the first supply flow path 313, and the first discharge flow path 316.

In this specification, an upward direction refers to a direction perpendicular to the principal plane 301a of the base 301, that is towards the first plate member 302 when viewed from the third plate member 304. Moreover, in this specification, a downward direction refers to a direction perpendicular to the principal plane 301a of the base 301, that is towards the third plate member 304 when viewed from the first plate member 302.

The flow path switch member accommodation part 340 extends in the direction intersecting the principal plane 301a of the base 301, and is provided at an intermediate part of the flow path that guides the liquid 211 to be measured to the separation element accommodation part 310. In the flow path structure 300 illustrated in FIG. 12, the flow path switch member accommodation part 340 extends in the direction (direction of plate thickness) perpendicular to the principal plane 301a of the base 301, and traverses between the first supply flow path 313 and the second supply flow path 343. As indicated by an arrow A32 illustrated in FIG. 12, the flow path switch member 330 moves linearly in the direction intersecting the first supply flow path 313 and the second supply flow path 343. In other words, the flow path switch member 330 is accommodated within the flow path switch member accommodation part 340, and can move (more particularly, slidable) inside the flow path switch member accommodation part 340 in the direction in which the flow path switch member accommodation part 340 extends. In other words, the flow path switch member 330 can move in the direction of the plate thickness of the base 301.

As illustrated in FIG. 8, the flow path switch member 330 has the flow path switch body 331. The flow path switch body 331 has a parallelepiped shape. The flow path switch body 331 has the first flow path 333, the second flow path 334, and the third flow path 335. Each of the first flow path 333, the second flow path 334, and the third flow path 335 penetrates the flow path switch body 331. In other words, both ends of each of the first flow path 333, the second flow path 334, and the third flow path 335 are formed as openings.

The structure of the flow path structure 300 other than the above is similar to the structure of the flow path structure 300 described above in conjunction with FIG. 5 through FIG. 9.

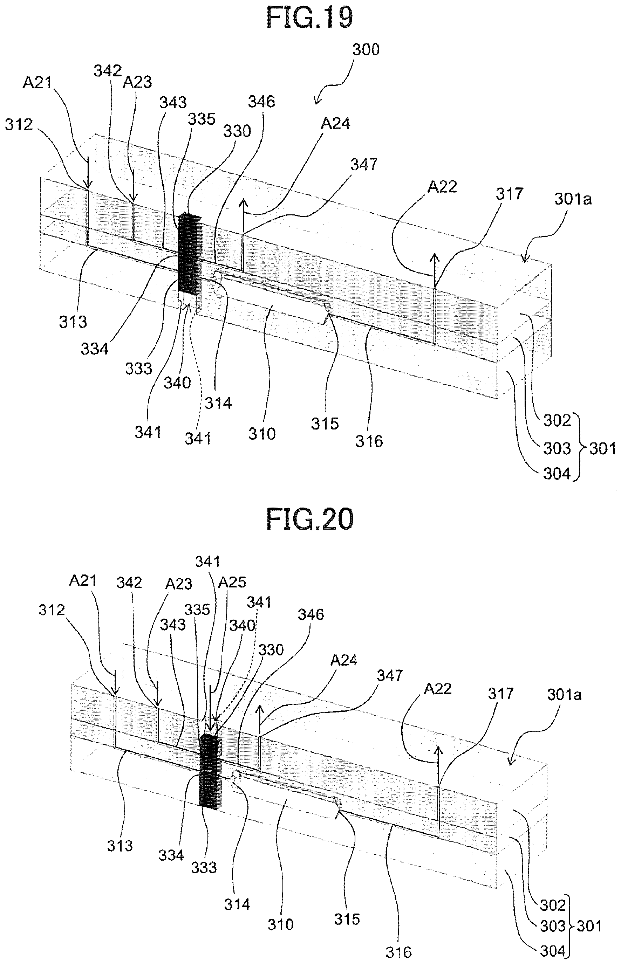

FIG. 19 is a schematic perspective view illustrating the case in which the flow path of the flow path structure in this embodiment is in the first flow path state.

FIG. 20 is a schematic perspective view illustrating the case in which the flow path of the flow path structure in this embodiment is in the second flow path state.

The method of measuring the liquid 211 to be measured using the flow path structure 300 in this embodiment will be described, by referring to FIG. 19 and FIG. 20.

First, as illustrated in FIG. 19, when starting the measurement, the first flow path 333 of the flow path switch member 330 is connected to the first supply flow path 313. On the other hand, the second flow path 334 of the flow path switch member 330 is connected to the second supply flow path 343 and the second discharge flow path 346. In other words, the flow path switch member 330 sets the state of the flow path of the flow path structure 300 to the first flow path state.

Next, as indicated by the arrow A21 illustrated in FIG. 19, the pump 120 is driven, and the developer solution 111 inside the storage part 110 is guided to the first supply flow path 313 through the opening 312. Then, as indicated by the arrow A22 illustrated in FIG. 19, the developer solution 111 flows through the first flow path 333 of the flow path switch member 330, the separation element 311, and the first discharge flow path 316, and is discharged from the opening 317.

On the other hand, as indicated by the arrow A23 illustrated in FIG. 19, the pressure fluctuation is applied to the inside of the tank 210, and the liquid 211 to be measured, inside the tank 210, is guided to the second supply flow path 343 through the opening 342. Then, as indicated by the arrow A24 illustrated in FIG. 19, the liquid 211 to be measured flows through the second flow path 334 of the flow path switch member 330 and the second discharge flow path 346, and is discharged from the opening 347. For this reason, in the first flow path state, the second flow path 334 is filled by the liquid 211 to be measured.

Next, as indicated by the arrow A25 illustrated in FIG. 20, the pump 120 is stopped, and the flow path switch member 330 is moved. Then, when the state of the flow path inside the base 301 makes a transition from the first flow path state to the second flow path state, the openings at both ends of the second flow path 334 of the flow path switch member 330 are closed by the sliding surfaces 341 opposing the flow path switch member 330. Hence, the closed space is formed by the second flow path 334 and the sliding surfaces 341. For this reason, the liquid 211 to be measured, flowing through the second flow path 334, is temporarily held in the closed space that is formed by the second flow path 334 and the sliding surfaces 341, to be separated from other liquids.

The volume of the second flow path 334 of the flow path switch member 330 does not change and is constant. For this reason, the flow path switch member 330 can measure the liquid 211 to be measured, flowing through the second flow path 334. In other words, the measurement of the liquid 211 to be measured is performed in the second flow path 334 of the flow path switch member 330. The second flow path 334 of the flow path switch member 330 corresponds to the sample measuring part that measures the liquid 211 to be measured.

When the flow path switch member 330 is moved further in the direction of the arrow A25 illustrated in FIG. 20, the second flow path 334 is connected to the first supply flow path 313. In addition, the third flow path 335 of the flow path switch member 330 is connected to the second supply flow path 343 and the second discharge flow path 346. In other words, the flow path switch member 330 switches the state of the flow path of the flow path structure 300 from the first flow path state to the second flow path state. Thereafter, the pump 120 is driven again.

Then, the measured amount of the liquid 211 to be measured is guided to the inside of the separation element accommodation part 310 in association with the flow of the developer solution 111. More particularly, the liquid 211 to be measured, that is temporarily held in the closed space formed by the second flow path 334 of the flow path switch member 330 and the sliding surfaces 341, and is measured in the second flow path 334 of the flow path switch member 330, is mixed with the developer solution 111 and guided to the inside of the separation element accommodation part 310. Hence, the flow path switch member 330 functions as the flow path switching part and the sample measuring part.

Accordingly, the mixture of the measured liquid 211 and the developer solution 111 is supplied to the separation element 311. In addition, the separation of the liquid 211 to be measured is performed. Next, the mixture of the liquid 211 to be measured and the developer solution 111 flows through the first discharge flow path 316 and is discharged from the opening 317. Next, the detector part 430 obtains the information related to the composition of the liquid 211 to be measured.

According to the flow path structure 300 in this embodiment, the flow path switch member 330 guides the liquid 211 to be measured, that is measured in the second flow path 334, to the inside of the separation element accommodation part 310, by moving in the direction of the plate thickness of the base 301. For this reason, it is possible to further reduce the size of the flow path structure 300 in the direction parallel to the principal plane 301a of the base 301. In addition, it is possible to obtain effects similar to the effects described above in conjunction with FIG. 5 through FIG. 11.

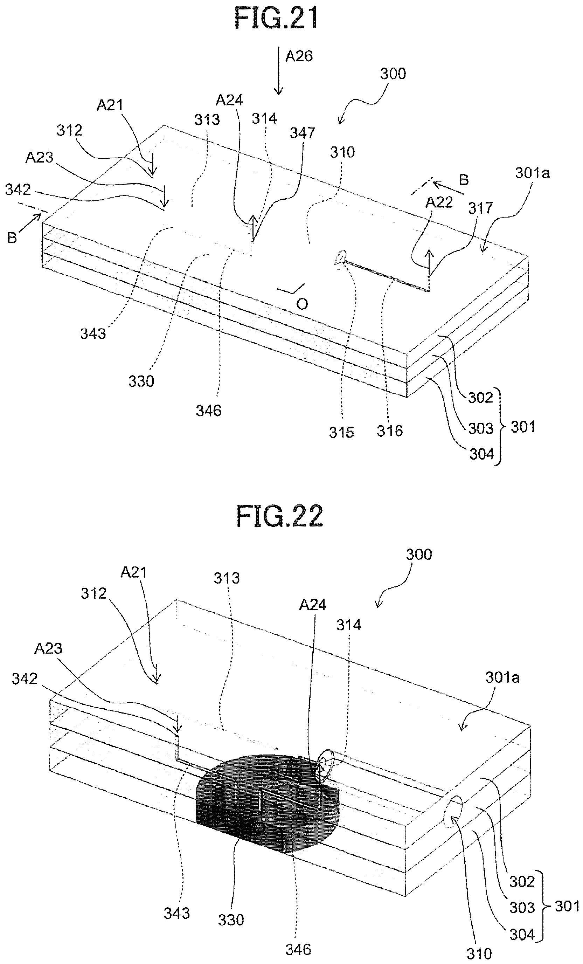

FIG. 21 is a schematic perspective view illustrating still another flow path structure in this embodiment.

FIG. 22 is a schematic cross sectional view illustrating the still other flow path structure in this embodiment.

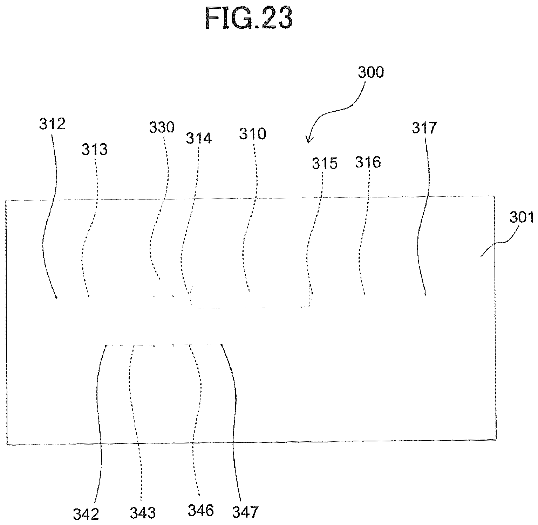

FIG. 23 is a schematic plan view illustrating the still other flow path structure in this embodiment.

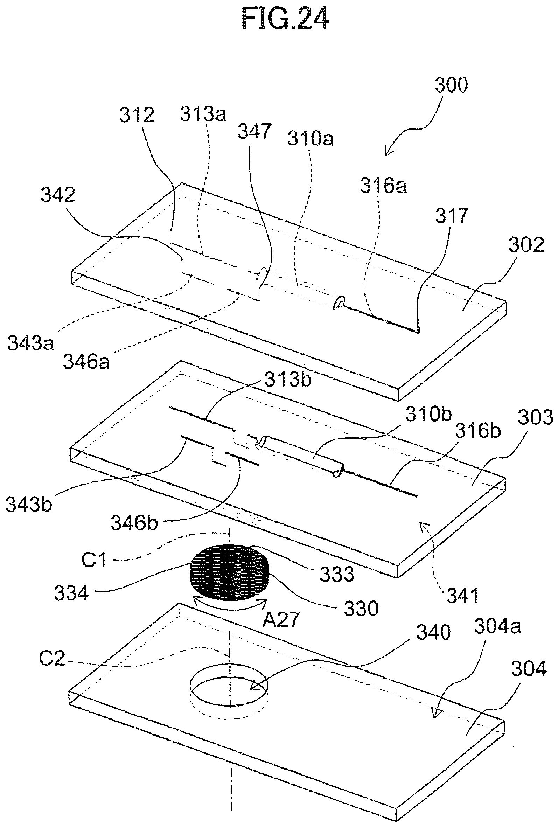

FIG. 24 is a schematic disassembled view illustrating the still other flow path structure in this embodiment.

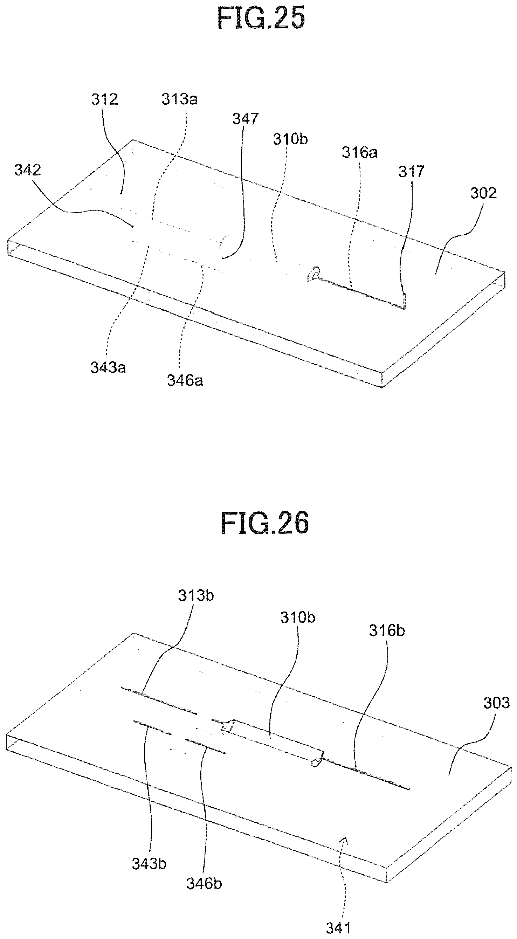

FIG. 25 is a schematic perspective view illustrating the first plate member in this embodiment.

FIG. 26 is a schematic perspective view illustrating the second plate member in this embodiment.

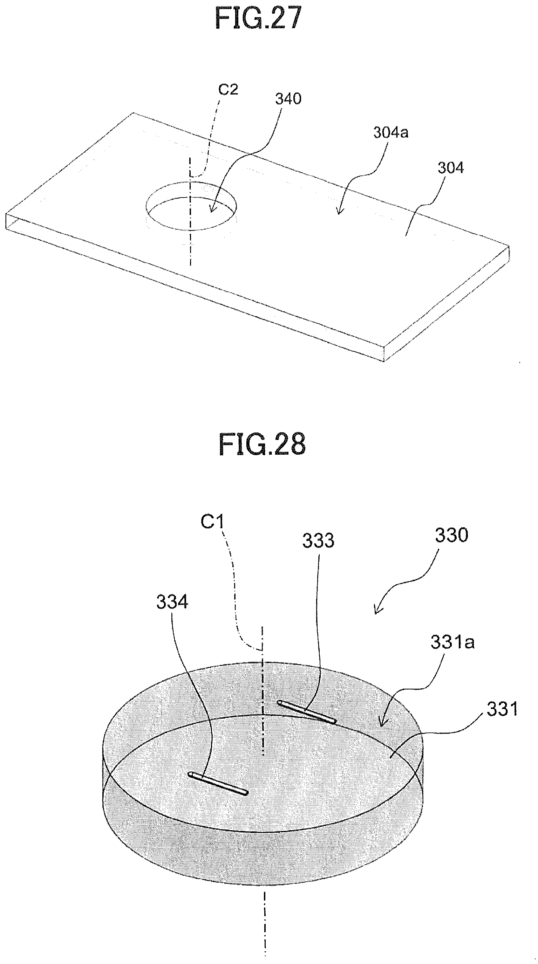

FIG. 27 is a schematic perspective view illustrating the third plate member in this embodiment.

FIG. 28 is a schematic perspective view illustrating the flow path switch member in this embodiment.

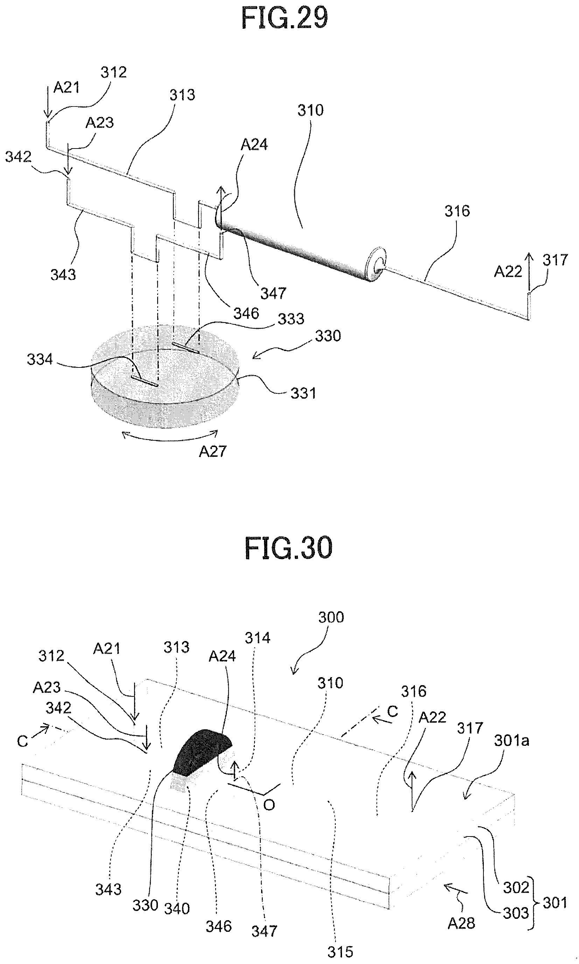

FIG. 29 is a schematic perspective view illustrating only a flow path part in this embodiment.

FIG. 22 is a right-angled cross sectional view along a cutting plane B-O-B illustrated in FIG. 21.

FIG. 23 is a schematic plan view when a flow path structure 300 in this embodiment is viewed in the direction of an arrow A26 in FIG. 21.

The flow path structure 300 illustrated in FIG. 21 through FIG. 24 has the base 301, and the flow path switch member 330. The base 301 has the first plate member 302, the second plate member 303, and the third plate member 304. The first plate member 302, the second plate member 303, and the third plate member 304 are laminated to form the laminated body. The materials forming the first plate member 302, the second plate member 303, and the third plate member 304 are the same as the materials forming the first plate member 302 and the second plate member 303 described above with reference to FIG. 5 through FIG. 11.

In the flow path structure 300 in this embodiment, the first supply flow path 313 is arranged side by side with the second supply flow path 343 in the direction parallel to the principal plane 301a of the base 301, similarly as in the case of the flow path structure 300 described above with reference to FIG. 5 through FIG. 11. In addition, the first discharge flow path 316 is arranged side by side with the second discharge flow path 346 in the direction parallel to the principal plane 301a of the base 301.

More particularly, as illustrated in FIG. 24 and FIG. 25, the first plate member 302 is provided with the part 313a of the first supply flow path 313, the part 316a of the first discharge flow path 316, the part 343a of the second supply flow path 343, and the part 346a of the second discharge flow path 346.

As illustrated in FIG. 24 and FIG. 26, the second plate member 303 is provided with the part 310b of the separation element accommodation part 310, the part 313b of the first supply flow path 313, the part 316b of the first discharge flow path 316, the part 343b of the second supply flow path 343, and the part 346b of the second discharge flow path 346.

As illustrated in FIG. 24 and FIG. 27, the third plate member 304 is provided with the flow path switch member accommodation part 340. The flow path switch member accommodation part 340 is formed as a hole having a cylindrical shape, and is provided at the intermediate part of the flow path that guides the liquid 211 to be measured to the separation element accommodation part 310. The flow path switch member accommodation part 340 illustrated in FIG. 24 and FIG. 27 penetrates the third plate member 304 in the direction of the plate thickness. A center axis C2 of the cylindrical hole forming the flow path switch member accommodation part 340 extends in a direction intersecting a principal plane 304a of the third plate member 304. In the third plate member 304 illustrated in FIG. 24 and FIG. 27, the center axis C2 of the cylindrical hole forming the flow path switch member accommodation part 340 extends in a direction perpendicular to the principal plane 304a of the third plate member 304. However, the flow path switch member accommodation part 340 does not necessarily have to penetrate the third plate member 304 in the direction of the plate thickness.

By laminating the first plate member 302 and the second plate member 303 together, the separation element accommodation part 310, the first supply flow path 313, the first discharge flow path 316, the second supply flow path 343, and the second discharge flow path 346 are formed on the base 301.

As illustrated in FIG. 28, the flow path switch member 330 has the flow path switch body 331. The flow path switch body 331 in this embodiment corresponds to a rotor, and has a cylindrical shape, for example. In other words, the flow path switch body 331 in this embodiment simply needs to function as a rotor that is rotatable, and may have the cylindrical shape at a part of the flow path switch body 331. The flow path switch body 331 has the first flow path 333, and the second flow path 334. Each of the first flow path 333 and the second flow path 334 is provided on a principal plane 331a of the flow path switch body 331.

The flow path switch member 330 is accommodated within the flow path switch member accommodation part 340 in a state in which the principal plane 331a provided with the first flow path 333 and the second flow path 334 faces towards the second plate member 303. In other words, the flow path switch member 330 is accommodated within the flow path switch member accommodation part 340 in the state in which a center axis C1 of the rotor extends in a direction intersecting the principal plane 304a of the third plate member 304. In the flow path structure 300 in this embodiment, the flow path switch member 330 is accommodated within the flow path switch member accommodation part 340 in the state in which the center axis C1 of the rotor extends in a direction perpendicular to the principal plane 304a of the third plate member 304. In other words, the flow path switch member 330 is accommodated within the flow path switch member accommodation part 340 in the state in which the center axis C1 of the rotor is parallel to the center axis C2 of the cylindrical hole forming the flow path switch member accommodation part 340.

When the first plate member 302, the second plate member 303, and the third plate member 304 are mutually laminated in the state in which the flow path switch member 330 is accommodated within the flow path switch member accommodation part 340, the first flow path 333 is connected to the first supply flow path 313, and one of the second supply flow path 343 and the second discharge flow path 346. In addition, the second flow path 334 is connected to the first supply flow path 313, and the other of the second supply flow path 343 and the second discharge flow path 346.

As indicated by an arrow A27 illustrated in FIG. 24 and FIG. 29, the flow path switch member 330 can rotate inside the flow path switch member accommodation part 340 using the center axis C1 of the rotor as a rotation center. Hence, the first flow path 333 is connected to the first supply flow path 313, or to the second supply flow path 343 and the second discharge flow path 346. In addition, the second flow path 334 is connected to the second supply flow path 343 and the second discharge flow path 346, or the first supply flow path 313.

The structure of the flow path structure 300 other than the above is similar to the structure of the flow path structure 300 described above in conjunction with FIG. 5 through FIG. 9.

The method of measuring the liquid 211 to be measured using the flow path structure 300 in this embodiment will be described, by referring to FIG. 29.

First, as illustrated in FIG. 29, when starting the measurement, the first flow path 333 of the flow path switch member 330 is connected to the first supply flow path 313. On the other hand, the second flow path 334 of the flow path switch member 330 is connected to the second supply flow path 343 and the second discharge flow path 346. In other words, the flow path switch member 330 sets the state of the flow path of the flow path structure 300 to the first flow path state.

Next, as indicated by the arrow A21 illustrated in FIG. 29, the pump 120 is driven, and the developer solution 111 inside the storage part 110 is guided to the first supply flow path 313 through the opening 312. Then, as indicated by the arrow A22 illustrated in FIG. 29, the developer solution 111 flows through the first flow path 333 of the flow path switch member 330, the separation element 311, and the first discharge flow path 316, and is discharged from the opening 317.

On the other hand, as indicated by the arrow A23 illustrated in FIG. 29, the pressure fluctuation is applied to the inside of the tank 210, and the liquid 211 to be measured, inside the tank 210, is guided to the second supply flow path 343 through the opening 342. Then, as indicated by the arrow A24 illustrated in FIG. 29, the liquid 211 to be measured flows through the second flow path 334 of the flow path switch member 330 and the second discharge flow path 346, and is discharged from the opening 347. For this reason, in the first flow path state, the second flow path 334 is filled by the liquid 211 to be measured.

Next, as indicated by the arrow A27 illustrated in FIG. 29, the pump 120 is stopped, and the flow path switch member 330 is rotated inside the flow path switch member accommodation part 340. Then, when the state of the flow path inside the base 301 makes a transition from the first flow path state to the second flow path state, the openings at both ends of the second flow path 334 of the flow path switch member 330 is closed by the sliding surfaces 341 opposing the flow path switch member 330. Hence, the closed space is formed by the second flow path 334 and the sliding surfaces 341. For this reason, the liquid 211 to be measured, flowing through the second flow path 334, is temporarily held in the closed space that is formed by the second flow path 334 and the sliding surfaces 341, to be separated from other liquids.

The volume of the second flow path 334 of the flow path switch member 330 does not change and is constant. For this reason, the flow path switch member 330 can measure the liquid 211 to be measured, flowing through the second flow path 334. In other words, the measurement of the liquid 211 to be measured is performed in the second flow path 334 of the flow path switch member 330. The second flow path 334 of the flow path switch member 330 corresponds to the sample measuring part that measures the liquid 211 to be measured.

When the flow path switch member 330 is rotated further in the direction of the arrow A27 illustrated in FIG. 29, the second flow path 334 of the flow path switch member 330 is connected to the first supply flow path 313. In addition, the first flow path 333 of the flow path switch member 330 is connected to the second supply flow path 343 and the second discharge flow path 346. In other words, the flow path switch member 330 switches the state of the flow path of the flow path structure 300 from the first flow path state to the second flow path state. Thereafter, the pump 120 is driven again.

Then, the measured amount of the liquid 211 to be measured is guided to the inside of the separation element accommodation part 310 in association with the flow of the developer solution 111. More particularly, the liquid 211 to be measured, that is temporarily held in the closed space formed by the second flow path 334 of the flow path switch member 330 and the sliding surfaces 341, and is measured in the second flow path 334 of the flow path switch member 330, is mixed with the developer solution 111 and guided to the inside of the separation element accommodation part 310. Hence, the flow path switch member 330 functions as the flow path switching part and the sample measuring part.

Accordingly, the mixture of the measured liquid 211 and the developer solution 111 is supplied to the separation element 311. In addition, the separation of the liquid 211 to be measured is performed. Next, the mixture of the liquid 211 to be measured and the developer solution 111 flows through the first discharge flow path 316 and is discharged from the opening 317. Next, the detector part 430 obtains the information related to the composition of the liquid 211 to be measured.

According to the flow path structure 300 in this embodiment, the flow path switch member 330 corresponds to the rotor having the cylindrical shape, for example, and rotates using the center axis C1 of the rotor as the rotation center, to introduce the liquid 211 to be measured, that is measured in the second flow path 334, to the inside of the separation element accommodation part 310. For this reason, it is possible to reduce the size of the flow path switch member 330, and to further reduce the size of the flow path structure 300. In addition, it is possible to obtain effects similar to the effects described above in conjunction with FIG. 5 through FIG. 11.

FIG. 30 is a schematic perspective view illustrating a still yet another flow path structure in this embodiment.

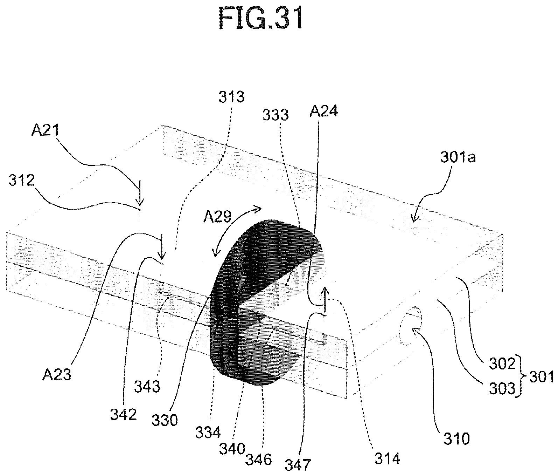

FIG. 31 is a schematic cross sectional view illustrating the still yet another flow path structure in this embodiment.

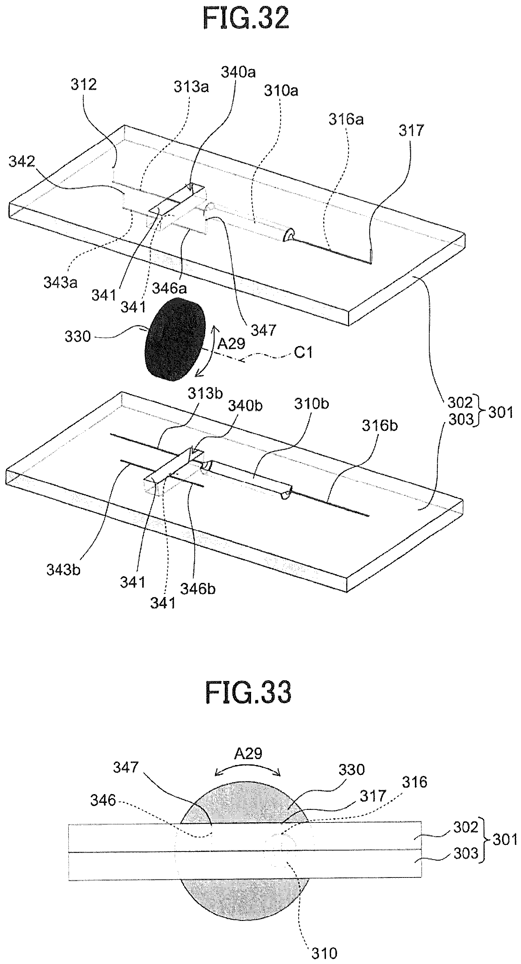

FIG. 32 is a schematic disassembled view illustrating the still yet another flow path structure in this embodiment.

FIG. 33 is a schematic plan view illustrating the still yet another flow path structure in this embodiment.

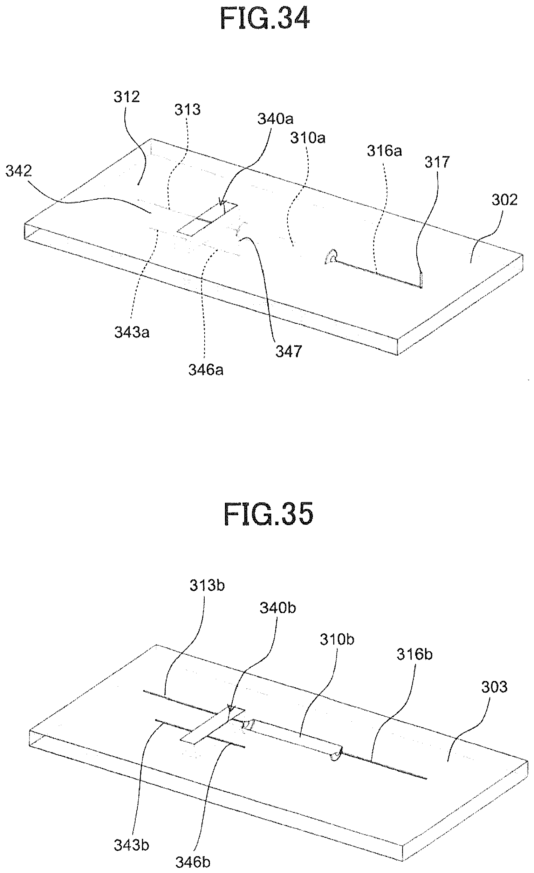

FIG. 34 is a schematic perspective view illustrating the first plate member in this embodiment.

FIG. 35 is a schematic perspective view illustrating the second plate member in this embodiment.

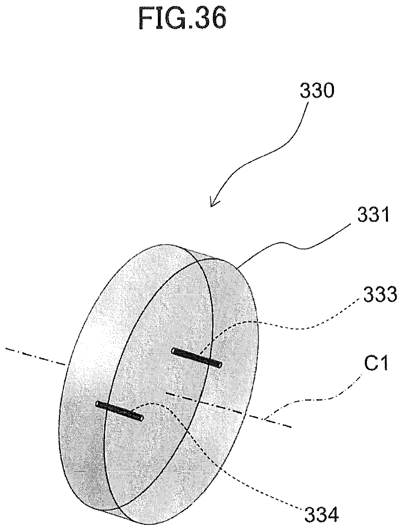

FIG. 36 is a schematic perspective view illustrating the flow path switch member in this embodiment.

FIG. 31 is a right-angled cross sectional view along a cutting plane C-O-C illustrated in FIG. 30.

FIG. 33 is a schematic plan view when a flow path structure 300 in this embodiment is viewed in the direction of an arrow A28 in FIG. 30.

A flow path structure 300 illustrated in FIG. 30 through FIG. 33 has the base 301, and the flow path switch part 330. The base 301 has the first plate member 302, and the second plate member 303. The first plate member 302 and the second plate member 303 are laminated to form the laminated body. The materials forming the first plate member 302 and the second plate member are the same as the materials forming the first plate member 302 and the second plate member 303 described above with reference to FIG. 5 through FIG. 11.

The base 301 has the separation element accommodation part 310, the first supply flow path 313, the first discharge flow path 316, the second supply flow path 343, and the second discharge flow path 346. Structures of each of the separation element accommodation part 310, the first supply flow path 313, the first discharge flow path 316, the second supply flow path 343, and the second discharge flow path 346 are the same as the structures of each of the separation element accommodation part 310, the first supply flow path 313, the first discharge flow path 316, the second supply flow path 343, and the second discharge flow path 346 described above with reference to FIG. 5 through FIG. 11.

In addition, the base 301 has the flow path switch member accommodation part 340. The flow path switch member accommodation part 340 is provided at an intermediate part of the flow path that guides the liquid 211 to be measured to the separation element accommodation part 310. In the flow path structure 300 in this embodiment, the flow path switch member accommodation part 340 traverses the first supply flow path 313 and the second supply flow path 343. More particularly, as illustrated in FIG. 32 and FIG. 34, the first plate member 302 is provided with the part 340a of the flow path switch member accommodation part 340. As illustrated in FIG. 32 and FIG. 35, the second plate member 303 is provided with the part 340b of the flow path switch member accommodation part 340. By laminating the first plate member 302 and the second plate member 303 together, the flow path switch member accommodation part 340 is formed on the base 301.

As illustrated in FIG. 36, the flow path switch member 330 has the flow path switch body 331. The flow path switch body 331 in this embodiment corresponds to the rotor, and has the cylindrical shape, for example. In other words, the flow path switch body 331 in this embodiment simply needs to function as the rotor that is rotatable, and may have the cylindrical shape at a part of the flow path switch body 331. The flow path switch body 331 has the first flow path 333, and the second flow path 334. Each of the first flow path 333 and the second flow path 334 penetrates the flow path switch body 331 in a direction parallel to the center axis C1 of the rotor. In other words, both ends of each of the first flow path 333 and the second flow path 334 are formed as openings.

As illustrated in FIG. 30 through FIG. 32, the flow path switch member 330 is held by the flow path switch member accommodation part 340 in a state in which the center axis C1 of the rotor extends in a direction parallel to the principal plane 301a of the base 301. As indicated by an arrow A29 illustrated in FIG. 31 through FIG. 33, the flow path switch member 330 can rotate using the center axis C1 of the rotor as a rotation center, in a state held by the flow path switch member accommodation part 340. Hence, the first flow path 333 is connected to the first supply flow path 313, or to the second supply flow path 343 and the second discharge flow path 346. In addition, the second flow path 334 is connected to the second supply flow path 343 and the second discharge flow path 346, or the first supply flow path 313. The structure of the flow path structure 300 other than the above is similar to the structure of the flow path structure 300 described above in conjunction with FIG. 5 through FIG. 9.

The method of measuring the liquid 211 to be measured using the flow path structure 300 in this embodiment will be described.

First, when starting the measurement, the first flow path 333 of the flow path switch member 330 is connected to the first supply flow path 313. On the other hand, the second flow path 334 of the flow path switch member 330 is connected to the second supply flow path 343 and the second discharge flow path 346. In other words, the flow path switch member 330 sets the state of the flow path of the flow path structure 300 to the first flow path state.

Next, as indicated by the arrow A21 illustrated in FIG. 30, the pump 120 is driven, and the developer solution 111 inside the storage part 110 is guided to the first supply flow path 313 through the opening 312. Then, as indicated by the arrow A22 illustrated in FIG. 30, the developer solution 111 flows through the first flow path 333 of the flow path switch member 330, the separation element 311, and the first discharge flow path 316, and is discharged from the opening 317.

On the other hand, as indicated by the arrow A23 illustrated in FIG. 30, the pressure fluctuation is applied to the inside of the tank 210, and the liquid 211 to be measured, inside the tank 210, is guided to the second supply flow path 343 through the opening 342. Then, as indicated by the arrow A24 illustrated in FIG. 30, the liquid 211 to be measured flows through the second flow path 334 of the flow path switch member 330 and the second discharge flow path 346, and is discharged from the opening 347. For this reason, in the first flow path state, the second flow path 334 is filled by the liquid 211 to be measured.

Next, as indicated by the arrow A29 illustrated in FIG. 31 through FIG. 33, the pump 120 is stopped, and the flow path switch member 330 is rotated. Then, when the state of the flow path inside the base 301 makes a transition from the first flow path state to the second flow path state, the openings at both ends of the second flow path 334 of the flow path switch member 330 are closed by the sliding surfaces 341 (refer to FIG. 32) opposing the flow path switch member 330. Hence, the closed space is formed by the second flow path 334 and the sliding surfaces 341. For this reason, the liquid 211 to be measured, flowing through the second flow path 334, is temporarily held in the closed space that is formed by the second flow path 334 and the sliding surfaces 341, to be separated from other liquids.

The volume of the second flow path 334 of the flow path switch member 330 does not change and is constant. For this reason, the flow path switch member 330 can measure the liquid 211 to be measured, flowing through the second flow path 334. In other words, the measurement of the liquid 211 to be measured is performed in the second flow path 334 of the flow path switch member 330. The second flow path 334 of the flow path switch member 330 corresponds to the sample measuring part that measures the liquid 211 to be measured.

When the flow path switch member 330 is rotated further in the direction of the arrow A29 illustrated in FIG. 31 through FIG. 33, the second flow path 334 of the flow path switch member 330 is connected to the first supply flow path 313. In addition, the first flow path 333 of the flow path switch member 330 is connected to the second supply flow path 343 and the second discharge flow path 346. In other words, the flow path switch member 330 switches the state of the flow path of the flow path structure 300 from the first flow path state to the second flow path state. Thereafter, the pump 120 is driven again.

Then, the measured amount of the liquid 211 to be measured is guided to the inside of the separation element accommodation part 310 in association with the flow of the developer solution 111. More particularly, the liquid 211 to be measured, that is temporarily held in the closed space formed by the second flow path 334 of the flow path switch member 330 and the sliding surfaces 341, and is measured in the second flow path 334 of the flow path switch member 330, is mixed with the developer solution 111 and guided to the inside of the separation element accommodation part 310. Hence, the flow path switch member 330 functions as the flow path switching part and the sample measuring part.

Accordingly, the mixture of the measured liquid 211 and the developer solution 111 is supplied to the separation element 311. In addition, the separation of the liquid 211 to be measured is performed. Next, the mixture of the liquid 211 to be measured and the developer solution 111 flows through the first discharge flow path 316 and is discharged from the opening 317. Next, the detector part 430 obtains the information related to the composition of the liquid 211 to be measured.

According to the flow path structure 300 in this embodiment, the flow path switch member 330 corresponds to the rotor having the cylindrical shape, for example, and rotates using the center axis C1 of the rotor as the rotation center, to introduce the liquid 211 to be measured, that is measured in the second flow path 334, to the inside of the separation element accommodation part 310. For this reason, it is possible to reduce the size of the flow path switch member 330, and to further reduce the size of the flow path structure 300. In addition, it is possible to obtain effects similar to the effects described above in conjunction with FIG. 5 through FIG. 11.

The particular structures of the measuring devices described above may be appropriately set according to the structure of the flow path structure, a type of liquid to be measured, or the like. For example, as described above in conjunction with FIG. 1, the storage part 110 of the liquid supply part 100 may be provided in the flow path structure 300.

The embodiments described above are illustrated in order to facilitate understanding of the present invention, and are not illustrated for the purposes of limiting the present invention. Accordingly, each of the elements disclosed in the embodiments described above may include all design modifications and equivalents that belong within the technical scope of the present invention.

The separation element may be an electrophoretic element. In this case, the flow path structure has an electrode part inside the flow path, and this electrode part is made electrically connectable to the measuring device.

### DESCRIPTION OF THE REFERENCE NUMERALS

10 Measuring Device
10a Measuring Device
11 Supply Pipe
100 Liquid Supply Part
110 Storage Part
111 Developer Solution
120 Pump
200 Sample Introduction Part
200a Sample Introduction Part
210 Tank
211 Liquid To Be Measured
220 Flow Path Switch Valve
230 Sample Loop
240 Measuring Pump
251 Needle
253 Injection Port
300 Flow Path Structure
300a Flow Path Structure
301 Base
301a Principal Plane
302 First Plate Member
303 Second Plate Member
304 Third Plate Member
304a Principal Plane
310 Separation Element Accommodation Part
310a Part
310b Part
310c Part
311 Separation Element
312 Opening
313 First Supply Flow Path
313a Part
313b Part
313c Part
314 Open End
315 Open End
316 First Discharge Flow Path
316a Part
316b Part
316c Part
317 Opening
330 Flow Path Switch Member
331 Flow Path Switch Body
331a Principal Plane
333 First Flow Path
334 Second Flow Path
335 Third Flow Path
340 Flow Path Switch Member Accommodation Part
340a Part
340b Part
340c Part
341 Sliding Surface
342 Opening
343 Second Supply Flow Path
343a Part
343b Part
346 Discharge Flow Path
346a Part
346b Part
347 Opening
400 Detector
410 Light Emitting Part
420 Light Receiving Part
430 Detector Part
A1 Arrow
A11 Arrow
A12 Arrow
A13 Arrow
A14 Arrow
A15 Arrow
A16 Arrow
A2 Arrow
A21 Arrow
A22 Arrow
A23 Arrow
A24 Arrow
A25 Arrow
A26 Arrow
A27 Arrow
A28 Arrow
A29 Arrow
A31 Arrow
A32 Arrow
A3 Arrow
A4 Arrow
A5 Arrow
A6 Arrow
A7 Arrow
C1 Center Axis
C2 Center Axis

## Claims

1. A flow path structure comprising:
a base that has
a separation element accommodation part accommodating a separation element that separates a plurality of components included in a liquid to be measured, and
a flow path switch member accommodation part provided at an intermediate part of a flow path that guides the liquid to be measured to the separation element accommodation part; and
a flow path switch member provided in the flow path switch member accommodation part,
**characterized in that**:
the flow path switch member switches a state of a flow path inside the base between
a first flow path state in which the liquid to be measured is guided to an inside of the flow path switch member, and
a second flow path state in which the liquid to be measured, guided to the inside of the flow path switch member, is guided to an inside of the separation element accommodation part,
wherein the liquid to be measured, guided to the inside of the flow path switch member, is held and measured when the state of the flow path inside the base makes a transition from the first flow path state to the second flow path state.

2. The flow path structure as claimed in claim 1, **characterized in that**:
the base further has
a first supply flow path that guides a developer solution as a mobile phase to the separation element accommodation part, and
a second supply flow path that guides the liquid to be measured,
the flow path switch member has
a first flow path that guides the developer solution, and
a second flow path that holds the liquid to be measured,
in the first flow path state, the first flow path is connected to the first supply flow path, and the second flow path is connected to the second supply flow path, and
in the second flow path state, the second flow path is connected to the first supply flow path.

3. The flow path structure as claimed in claim 2, **characterized in that**:
the flow path switch member is slidably provided inside the flow path switch member accommodation part, and
when the flow path switch member slides inside the flow path switch member accommodation part and the state of the floe path inside the base makes the transition from the first flow path state to the second flow path state, openings at both ends of the second flow path is closed by sliding surfaces opposing the flow path switch member, and the flow path switch member holds and measures the liquid to be measured, guided to the second flow path.

4. The flow path structure as claimed in claim 2 or 3, **characterized in that** the flow path switch member moves linearly in a direction intersecting the first supply flow path and the second supply flow path.

5. The flow path structure as claimed in claim 4, **characterized in that**:
the flow path switch member accommodation part extends in a direction parallel to a principal plane of the base, and
the flow path switch member has a parallelepiped shape, and is movable inside the flow path switch member accommodation part along a direction in which the flow path switch member accommodation part extends.

6. The flow path structure as claimed in claim 4, **characterized in that**:
the flow path switch member accommodation part extends in a direction intersecting a principal plane of the base, and
the flow path switch member has a parallelepiped shape, and is movable inside the flow path switch member accommodation part along a direction in which the flow path switch member accommodation part extends.

7. The flow path structure as claimed in any of claims 4 to 6, **characterized in that** the flow path switch member is connected to the second supply flow path in the second flow path state, and further includes a third flow path that guides the liquid to be measured.

8. The flow path structure as claimed in claim 2 or 3, **characterized in that** the flow path switch member is a rotor that is rotatable inside the flow path switch member accommodation part, and a center axis of the rotor is held by the flow path switch member accommodation part in a state in which a center axis of the rotor extends in a direction intersecting a principal plane of the base.

9. The flow path structure as claimed in claim 2 or 3, **characterized in that** the flow path switch member is a rotor that is rotatable inside the flow path switch member accommodation part, and a center axis of the rotor is held by the flow path switch member accommodation part in a state in which a center axis of the rotor extends in a direction parallel to a principal plane of the base.

10. The flow path structure as claimed in claim 8 or 9, **characterized in that** the rotor has a cylindrical shape.

11. The flow path structure as claimed in any of claims 1 to 10, **characterized in that** the base is a laminated body formed by a plurality of laminated plate members.

12. The flow path structure as claimed in any of claims 1 to 11, **characterized in that** the separation element is a separation column.

13. The flow path structure as claimed in any of claims 1 to 11, **characterized in that** the separation element is an electrophoretic element.

14. A measuring device for the liquid to be measured, **characterized in that** there are provided:
the flow path structure according to any one of claims 1 to 13;
a liquid supply part that supplies a developer solution to the flow path structure;
a sample introduction part that supplies the liquid to be measured to the flow path structure; and
a detector having a light emitting part that emits measuring light for measuring information related to components included in the liquid to be measured, and a light receiving part that detects the measuring light irradiated on the liquid to be measured.
